# EUROPEAN PATENT SPECIFICATION

(11) **EP 0 875 826 B1**
(45) Date of publication and mention of the grant of the patent: **19.12.2012**
(21) Application number: 98107273.9
(22) Date of filing: 21.04.1998
(51) Int. Cl.: G06F 11/30, G06F 9/46

(54) **Monitoring and control system and information recording medium used in the same**
Überwachungs- und Steuerungsystem und darin verwendetes Informationsaufnahmemedium
Système de contrôle et de surveillance et médium d'enregistrement d'information utilisé dans ce système

(30) Priority: 21.04.1997 JP 11760597; 23.02.1998 JP 5749198
(43) Date of publication of application: 04.11.1998
(73) Proprietor: Kabushiki Kaisha Toshiba, Saiwai-ku, Kawasaki-shi (JP)
(72) Inventor: Yoshio, Ebata, Minato-ku, Tokyo 105-8001 (JP); Kiyoshi, Kubo, Minato-ku, Tokyo 105-8001 (JP); Masashi, Hayamizu, Minato-ku, Tokyo 105-8001 (JP); Kuniaki, Suzuki, Minato-ku, Tokyo 105-8001 (JP); Kotaro, Takasaki, Minato-ku, Tokyo 105-8001 (JP)
(74) Representative: Henkel, Breuer & Partner

(56) References cited:
- EP-A- 0 304 880
- US-A- 4 216 528
- PATENT ABSTRACTS OF JAPAN vol. 018, no. 645 (P-1839), 7 December 1994 & JP 06 250869 A (HITACHI LTD), 9 September 1994,

## Description

The present invention relates to a monitor control system and an information recording medium used in the monitor control system.

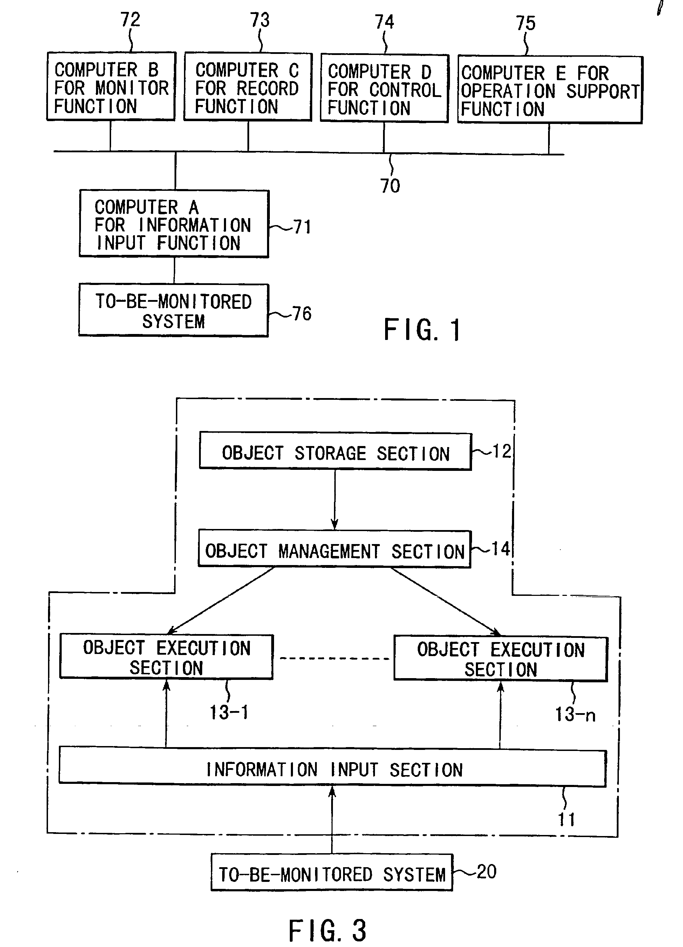

In a conventional monitor control computer system, even if it is of a distribution type system using a plurality of computers, the function to be executed by each computer is fixed. However, with an increase in functions (i.e. the scale of system), the number of required computers or the required performance of each computer will gradually increase. FIG. 1 shows an example of a conventional typical distribution-type monitor control system in the field of power systems.

The system shown in FIG. 1 has a distribution-type structure wherein five computers 71 to 75 are connected via a LAN 70. The computer 71 performs an information input function, the computer 72 a monitoring function, the computer 73 a recording function, the computer 74 a control function, and the computer 75 an operation support function. These computers perform their fixed functions. The computer 71 receives information from a to-be-monitored system 76 such as a power system.

In this conventional system, either of the following methods (1) and (2) is adopted in order to enhance the functions of the system:
(1) Add a new computer and assign a desired function to the added computer, or
(2) Instead of adding a new computer, choose one of the currently used computers, provide the chosen computer with a central processing unit (CPU), extend the capacity of an auxiliary memory device or a main memory device, and add a function to the computer.

As is clear from the above, according to the conventional methods, the increase of functions is technically limited or the cost is increased.

Specifically, the method (1), the number of distributed-processing computers is increased, and the added computer is provided with an extension function. Consequently the cost is increased. In the method (2), in which an additional CPU is provided and the additional CPU is made to have an extended function, is feasible only in the case of a computer in which a CPU can be added.

In the method (1), a distributed-processing computer needs to be provided for each function. If the number of functions increases, the number of computers to be installed also increases and this incurs a very high cost.

The method (2) is not applicable to all types of computers. The method (2) can be adopted only in the computer originally having a function of extending a CPU. Thus, the capability of computers, to which the method (2) of extending the function is applicable, is limited.

US-A-4216528 discloses a system allowing dedicated monitor software to be generated only by inputting the monitor specification without programming. In this regards, there is a direct connection between the console terminal and the computer. In other words, the monitor software of this document is downloaded to the computer after maintenance of the controlled object.

Additionally, JP06-1250869 discloses a system of cooperating processors in a control system.

The present invention has been made in consideration of the above circumstances, and its object is to provide a monitor control system wherein the functions relating to monitoring can be easily extended and the computers can be efficiently used, as well as an information recording medium for use in the monitor control system.

According to the present invention, the above object is achieved by a monitor controlling system according to claim 1. The dependent claims are directed to different advantageous aspects of the present invention.
FIG. 1 is a conceptual view of a conventional monitor control system;
FIG. 2 is a conceptual view of a monitor control system of the invention;
FIG. 3 is a block diagram illustrating the concept of the system of FIG. 2;
FIG. 4 is a block diagram showing a specific example of the information input section 11;
FIG. 5 is a block diagram showing a specific example of the object storage section 12;
FIG. 6 is a block diagram showing a specific example of the object execution section 13;
FIG. 7 is a block diagram showing a specific example of the object management section 14;
FIG. 8 is a block diagram illustrating a case where the object management section 14 and object storage section 12 are physically constituted by the same computer system;
FIG. 9 is a block diagram illustrating a case where the object management section 14 and object execution section 13 are physically constituted by the same computer system;
FIG. 10 is a flow chart showing an example of the processing by the object management section 14;
FIG. 11 is a flow chart showing an example of the processing by the object execution section 13;
FIG. 12 is a block diagram showing an example of a display object execution section;
FIG. 13 is a block diagram showing an example of a record object execution section;
FIG. 14 is a block diagram showing an example of a system monitor board object execution section;
FIG. 15 is a block diagram showing an example of a control object execution section;
FIG. 16 is a block diagram showing an example of a monitor object execution section;
FIG. 17 shows start conditions of the object execution section;
FIG. 18 is a conceptual view of a power-system monitor control system obtained by combining the object execution sections;
FIG. 19 is a conceptual view showing a power-system monitor control system in which the functions of the system shown in FIG. 18 are extended;
FIG. 20 is a flow chart illustrating the supply management processing by the object management section;
FIG. 21 shows the structure of Embodiment 1 of the monitor control system of the present invention;
FIG. 22 shows the structure of Embodiment 2 of the monitor control system of the invention;
FIG. 23 shows the structure of Embodiment 3 of the monitor control system of the invention;
FIG. 24 shows the structure of Embodiment 4 of the monitor control system of the invention;
FIG. 25 shows the structure of Embodiment 5 of the monitor control system of the invention;
FIG. 26 shows the structure of Embodiment 6 of the monitor control system of the invention;
FIG. 27 shows the structure of Embodiment 7 of the monitor control system of the invention;
FIG. 28 shows the structure of Embodiment 8 of the monitor control system of the invention;
FIG. 29 shows the structure of Embodiment 9 of the monitor control system of the invention;
FIG. 30 shows the structure of Embodiment 10 of the monitor control system of the invention;
FIG. 31 shows the structure of Embodiment 11 of the monitor control system of the invention;
FIG. 32 shows the structure of Embodiment 12 of the monitor control system of the invention;
FIG. 33 shows the structure of Embodiment 13 of the monitor control system of the invention;
FIG. 34 shows the structure of Embodiment 14 of the monitor control system of the invention;
FIG. 35 shows the structure of Embodiment 15 of the monitor control system of the invention;
FIG. 36 shows the structure of Embodiment 16 of the monitor control system of the invention;
FIG. 37 shows formed dynamic objects;
FIG. 38 shows the structure of Embodiment 17 of the monitor control system of the invention;
FIG. 39 shows formed dynamic objects;
FIG. 40 is a block diagram showing a power system monitor control system according to an embodiment of the invention;
FIG. 41 illustrates a concept of message exchange;
FIG. 42 is a conceptual view showing an example in which the performance of the whole system deteriorates due to an information transmission speed of the network between the information input section and each object execution section;
FIG. 43 is a block diagram showing a monitor control system according to an embodiment of the invention;
FIG. 44 is a block diagram showing an object execution section of a monitor control system according to an embodiment of the invention;
FIG. 45 is a block diagram showing a monitor control system according to an embodiment of the invention;
FIG. 46 shows a structure obtained by specifying the structure shown in FIG. 45;
FIG. 47 is a block diagram showing a monitor control system according to an embodiment of the invention;
FIG. 48 is a conceptual view illustrating the operation of the structure shown in FIG. 47; and
FIG. 49 is a block diagram showing a monitor control system according to an embodiment of the invention.

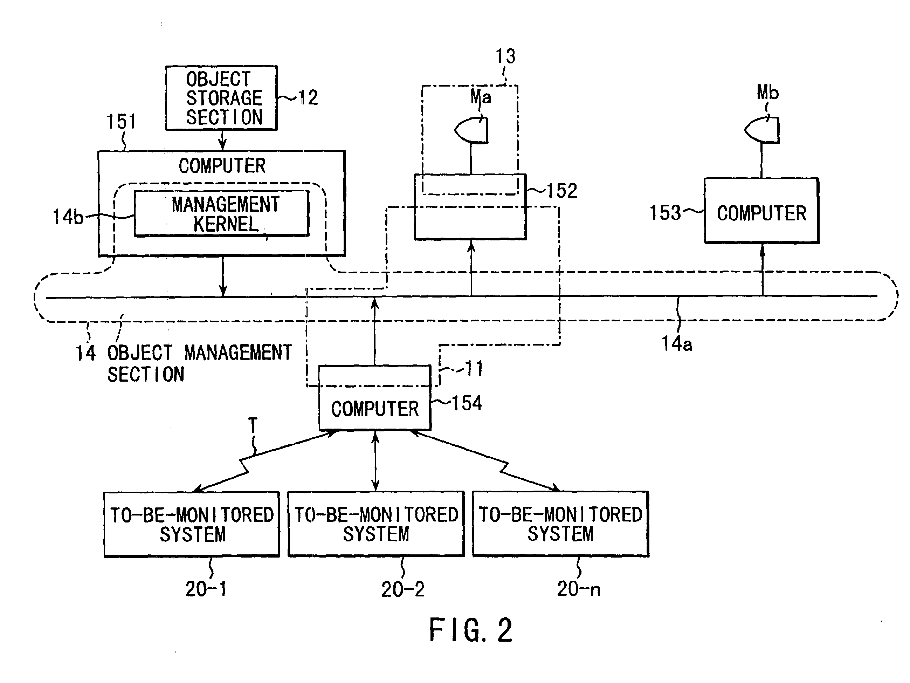

In order to make easier the understanding of the concept of the present invention, a description will first be given of FIG. 2, which is a diagram illustrating the concept of the invention, and FIG. 3, which is a block diagram illustrating the function of the invention. In the description of the invention, a power system is mainly described as an example of the system to be monitored. However, this invention is applicable to a power generating plant, a water supply and drainage plant, a chemical plant, etc.

In FIG. 2, reference numerals 151, 152, 153 and 154 denote computers which are connected to a network such as a LAN.

Although not shown, the computer 151 includes an initializing file. A management kernel 14b is stored in the initializing file. The term "kernel" generally refers to a central part of an operating system (OS). In this invention, the kernel refers to a part functioning as a management section for distributing the objects.

The management kernel 14b accesses an object storage section 12 and reads out objects. The read-out objects are distributed via the network 14a to object execution sections 13 provided in other computers 152 and 153. The computer 151 can use e.g. Web server software. On the other hand, the computers 152 and 153 can use Web client software.

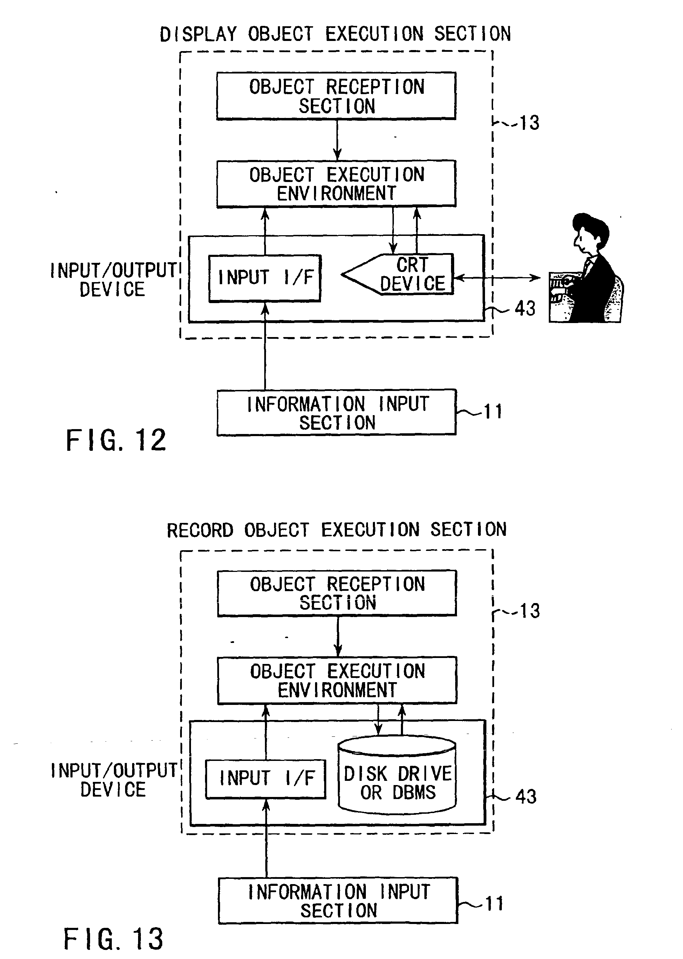

The aforementioned object is a software for performing part or all of the functions of displaying or recording state information indicating the state of a system to be monitored or controlled, or of monitoring, controlling or supporting the driving of the system on the basis of the state information. The object comprises either a program or data, or both the program and data. Examples of the object will be described in detail with reference to FIG. 12 and the following Figures.

Numerals 20-1, 20-2, ..., 20-n (hereinafter mentioned as merely "20") denote systems to be monitored and controlled, such as a power system, a power generator, a water supply and drainage plant or a chemical plant. The to-be-monitored and controlled system 20 inputs information indicating the state of the system 20 to the computer 154 over a wire or wireless transmission path T.

In the present invention, a section comprising the network 14a and management kernel 14b is referred to as object management section 14, and a section (indicated by a dot-and-dash line) comprising part of functions of the computer 152 and part of functions of the network 14a and computer 154 is referred to as information input section 11. Although the information input section 11 is also constituted between the computer 153, network 14a and computer 154, it is omitted for the purpose of simpler description. The concept of the present invention has been described.

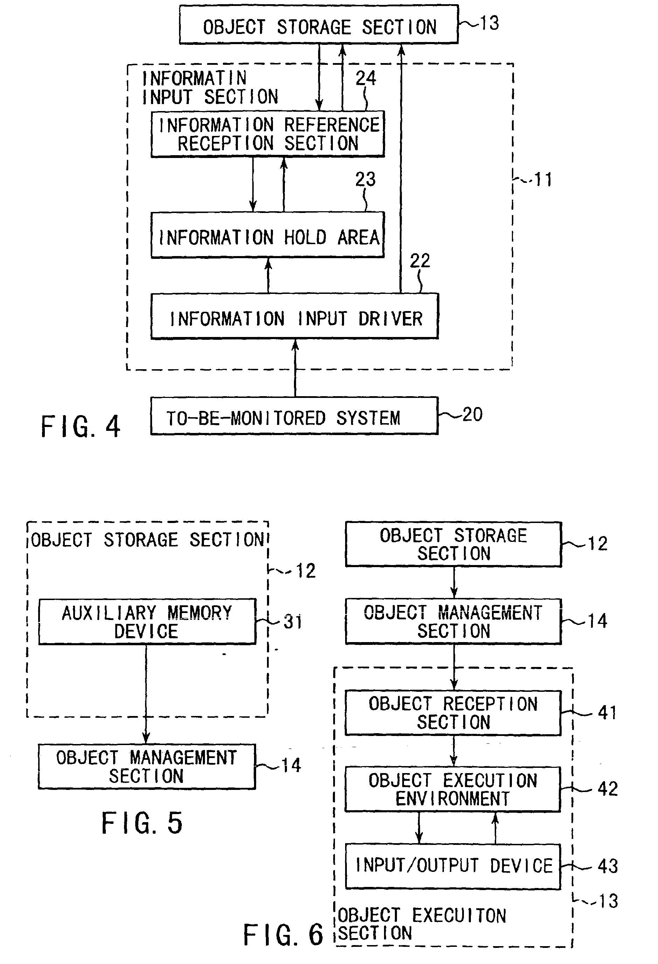

FIG. 3 is a conceptual view illustrating, in particular, the functions of the structure shown in FIG. 2. The details of each part of the structure of FIG. 3 will be further described with reference to FIG. 4 and the following Figures. Information representing the state of the to-be-monitored and controlled system 20, whose state is varying, is input to the information input section 11, and the information is transferred to a selected one of the object execution sections 13. This process will now be described in greater detail.

When the information input section 11 has started operations upon an instruction, it begins to gather all status information on the to-be-monitored system 20 from an input unit such as a telecontrol device, and inputs the gathered information as status data. In this context, the status information is information representing various supply states in the to-be-monitored system, e.g. information on the open and closed state of a valve, turn on and off state of an electric device, etc.

In this invention, the "input" of information means either of the two:
(1) To store information in data information retaining area in the information input section, or
(2) To immediately output information to all object execution sections 13, using broadcast communication, without storing the gathered information. However, in this invention, the method of outputting the information to the object execution section is not limited.

In this invention, the method of "input" is not limited. Numerical information on a voltage, a current, a power flow, etc. of the power system is input from the input unit such as the telecontrol (TC) device. Such information is input as all numerical data in the information input section. After all status information of the power system has been gathered, a status change in the gathered status information of the power system is monitored and the status change is input to the information input section as status change data.

When a request for reference to each information from some other object execution section 13, the information input section provides such information. In addition, when a request for reporting occurrence of the status change data ("status change request") has been issued from some other object execution section, the status change is reported to the origin of the request when the occurrence of the status change data has been detected.

FIG. 4 shows an example of the information input section 11. This invention, however, is not limited to the structure shown in FIG. 4. In FIG. 4, reference numeral 22 denotes an information input driver, and 23 an information hold area for holding the input information from the driver 22. Numeral 24 denotes an information reference reception section, which is required when the information input section 11 and object execution section 13 are provided in different computers but can be dispensed with if the sections 11 and 13 are provided in the same computer.

The object storage section 12 shown in FIG. 12 stores various objects necessary for monitoring, controlling and monitoring and controlling the to-be-monitored and controlled systems. For example, as shown in FIG. 5, an auxiliary memory device 31 is provided in the object storage section 12.

The auxiliary memory device 31 stores objects such as an object for monitoring or controlling the to-be-monitored and controlled system or an object for inputting status data of the to-be-monitored system.

The object management section 14 reads out the objects and distributes them to the object execution sections 13-1 to 13-n (hereinafter generally referred to as "13" in a case where it is not need to represent the meaning of the plurality of the object execution sections).

The object execution section 13 executes the specific functions of the respective objects. The object execution section 13 constitutes, by software processing within the computer, an object reception section 41, an object execution environment 42 and an input and output device 43, as shown in, for example, FIG. 6. The details of the object execution section 13 will be described later.

The object management section 14 distributes the objects, which are stored in the object storage section 12, to the associated object execution sections 13-1 to 13-n. The distribution of the objects is performed according to the following operations (1) to (3).
(1) At least one object necessary for display, monitoring, recording, controlling, or supporting operations of the to-be-monitored and controlled system is determined. Where the functions are distributed to the separately arranged computers, as shown in FIG. 2, the associated computer is chosen.
(2) One of the object execution sections 13-1 to 13-n is selected to execute the determined object.
(3) The object determined in operation (1) is delivered to the object execution section 13 determined in operation (2), and the object execution section 13 is instructed to execute the object.

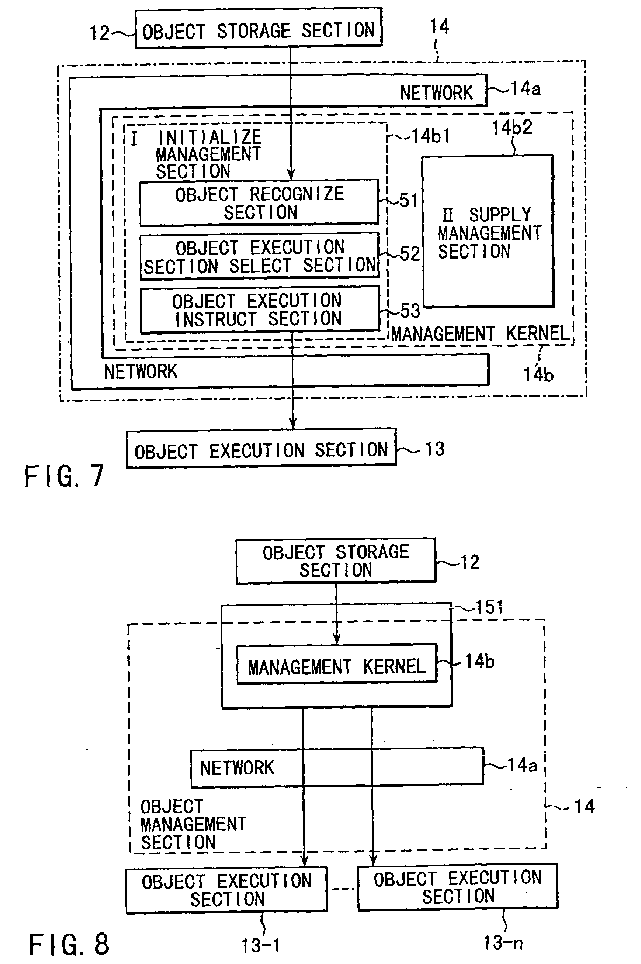

The object management section 14 is constructed within the computer, for example, as shown in FIG. 7. In the example shown in FIG. 7, the object management section 14 comprises network 14a and management kernel 14b. The management kernel 14b comprises an initialize management section 14b1 and a supply management section 14b2.

The initialize management section 14b1 comprises an object recognition section 51, an object execution section select section 52 and an object execution instruct section 53 (these elements will be described later in detail).

The management kernel 14b can be entirely constructed by software. The object management section 14 including the network 14a can be constructed on an ordinary workstation (WS) or personal computer (PC) connected to the network.

In FIG. 2, the computers 151 to 154 are physically separated from one another. However, these computers may be integrated as a single computer.

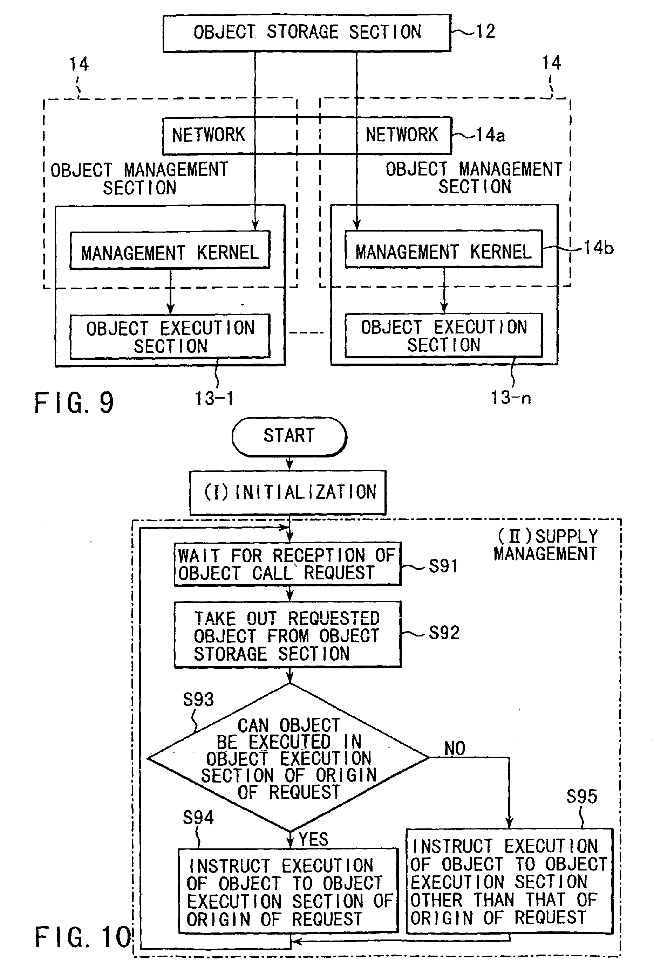

FIG. 8 shows a case where the object management section 14 and object storage section 12 are constructed within a single physically integrated computer. FIG. 9 shows a case where the object management section 14 and object execution section 13 are constructed within a single physically integrated computer. In particular, in the case of FIG. 9, a plurality of object management sections 14 are provided. Although the detailed structure of the management kernel is not shown in FIGS. 8 and 9, it is the same as that shown in FIG. 7.

Since the respective sections 11 to 14 shown in FIG. 3 have been generally described, it will now be described how the object execution section 13 activates the object distributed from the object management section 14, and how it actually performs the functions of the respective objects.

### [Method of Activation]

(1) Case in which the object is a monitor control program:
   The object execution section reserves either or both of an area of the main memory and an area of the auxiliary memory (hereinafter called "disk"), which are necessary for executing the supplied program, and starts the execution of the program.
(2) Case in which the object is data:
   The object execution section reserves the capacity of either or both of the main memory and disk, which is necessary for storing the supplied data, and arranges the environment so that the stored data can be used by another program.
(3) Case in which the object includes both a monitor control program and data:
   The object execution section reserves either or both of an area of the disk and an area of the main memory, which are necessary for storing the supplied data, and arranges the environment for use of the supplied data on the basis of a program supplied along with this data. Then, the object execution section reserves either or both of an area of the main memory and an area of the disk, which are necessary for executing the program, and starts the execution of the program.

The object execution section activates the object and then executes the object, whereby the functions for monitoring and controlling are achieved. Specifically, the object to be executed by the object execution section takes in the information representing the state of the to-be-monitored system from the information input section, and achieves, using the taken-in information, part or all of the functions of displaying, monitoring, recording, controlling and supporting the operation of the to-be-monitored system.

The object management section 14 generally perform the following two operations:
(1) Initialization of the power system monitor control system (initialization management) and
(2) Supply management of objects during the operation of the power system monitor control system (supply management).

These operations are performed as follows:
I) Initialization of the power system monitor control system:
   The object management section effects the initialization of the power system monitor control system by the following three operations I-1 to I-3.

### I-1: Identification of Object Management Section

The object management section, after starting execution, confirms the presence of the object execution section connected to the network (i.e. the number and locations of object execution sections in operation), or the presence of the object execution section within the same computer as the object management section. The method of confirmation is, for example, one of the following (1) to (3) (it should be noted that the method is not specified):
(1) To read out the contents pre-stored in an initialization file, thereby confirming the presence of the execution section,
(2) To acquire information from the object execution section connected via the information transmission, thereby confirming the presence of the execution section, or
(3) In a case where the object management section 14 is constructed by the same computer as the object execution section 13, to recognize, by a preset procedure, the object execution section within the same computer.

### I-2: Selection of Execution Object

Once the object management section 14 has confirmed the presence of the object execution section 13, the object management section selects the object for realizing the power system monitor control system, for example, by one of the following methods (it should be noted that the method is not specified):
(1) To read out the contents pre-described in the initialization file, or
(2) To select the object on the basis of input information from a man-machine device.

When there are a plurality of object execution sections, the object management section 14 selects the object execution section to be executed, by any selection method (for example, selecting an object execution section with a low load).

### I-3: Object Execution Instruction

After the object execution section has been confirmed and the to-be-executed object has been confirmed, the object management section 14 supplies the object from the object storage section to the object execution section and instructs the execution of the object. In this context, the object execution instruction refers to "supplying the object stored in the object storage section to the object execution section, and instructing the execution of the object."

In the present invention, the method in which the object management section supplies the object from the storage section to the object execution section is not specified. For example, a desired network such as a LAN or WAN may be used and the object is transmitted over such a network. More specifically, the network of TCP/IP (Transmission Controlled Protocol over Internet Protocol) and the file transfer protocol (FTP) on the TCP/IP may be used.

### II) Supply management object

The object management object section enables a object dynamically to call another object and to order the called object to carry out part of the functions of the power system monitor control system.

The object management section manages, by the following functions, the supply of the object called dynamically from the objects being executed.

FIG. 10 is a flow chart illustrating the contents of the process of the object management section 14. This process comprises (I) an initialization process and (II) a supply management process. In the initialization process, the functions of the respective computers and the order of priority are preset in the management kernels within the initialization files of the respective computers, as shown in FIG. 2.

The supply management process comprises the following four processes.
(1) If the initialization of the power system monitor control system is completed by the process (I), an object call request from the object the execution of which was instructed is awaited (step S91).
(2) If the object call request is issued from the object the execution of which was instructed, the requested object is taken out of the object storage section (step S92).
(3) It is determined whether the taken-out object of the origin of request is feasible (step S93). If the object is feasible ("YES"), the object execution section of the origin of request is instructed to execute the taken-out object (step S94).
(4) If the taken-out object is the object of the origin of request but is not feasible ("NO"), a feasible object is selected from the other object execution sections identified by the process (I) (step S95).

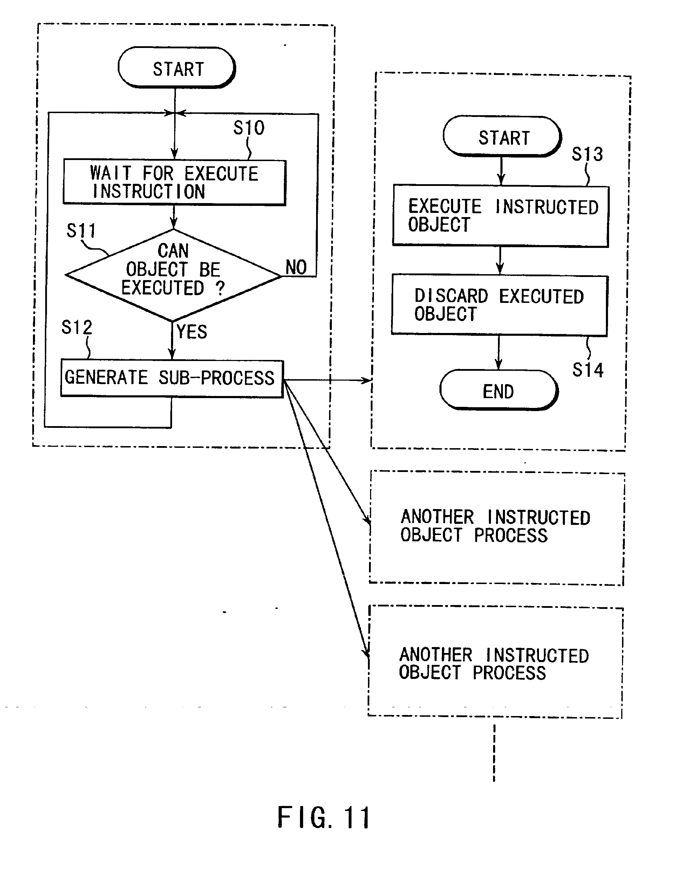

Through the above operations, the object management section responds to the new object execution request from the object being executed. The object execution section 13 can execute one or more objects on the basis of the object execution instruction from the object management section 14. For example, the object execution section 13 operates as follows. FIG. 11 is a flow chart illustrating the processing of the object execution section. This processing comprises the following five steps.
(1) After the operation is started, an object execution instruction from the object management section 14 is awaited (step S10).
(2) If the object execution instruction from the object management section 14 is received, it is determined whether the object, the execution of which has been instructed, can be executed in the object execution section which has received the instruction (step S11).
(3) If the object can be executed, an associated sub-process is generated (step S12) and the execution of the object is started (step S13).
(4) If the execution of the object is completed, the result of the execution is reported to the object management section 14 and the executed object is discarded (S14). (It should be noted that there is an object which continues an endless operation once it has started to operate.)
(5) If the object execution section 13 can execute another object after the execution of the present object has began and before this object is completed, the object execution section 13 awaits an object instruction from the object management section 14 (step S10).

If an execution instruction of another object is issued in this state, the object execution section 13 generates an associated sub-process (step S12) and executes the other object. Through the operations described up to here, the functions (display, monitor, record, control, etc.) of the monitor control system are performed. The information input section itself may be realized by the above operations. However, as in conventional dispersion-type systems, the information input section may be fixedly realized by a specific computer.

An example of part of the objects constituting the monitor control system will now be described. For example, the monitor control system may be constituted by combining the following objects, as desired.

FIG. 12 shows the object execution section for executing the display object. This is the object execution section providing a function of displaying the state of the to-be-monitored and controlled system on the monitor (CRT apparatus). This function can be realized by the computer with a CRT device, as shown in FIG. 12.

This object execution section can be constructed such that the input/output device 43 shown in FIG. 6 has a function of taking in information from the information input section and a CRT device (monitor). Numeral 13 denotes the object execution section, and numeral 43 an input/output device having a CRT device (monitor) and an input interface.

FIG. 13 shows a record object execution section 13 providing a function of storing and recording the state of the to-be-monitored and controlled system. This object execution section can be realized by a computer having an auxiliary storage device (disk drive) for data storage and recording, as shown in FIG. 13. Specifically, in this case, the input/output device 43 shown in FIG. 6 has a function (input I/F) of taking in information from the information input section 11 and a disk drive.

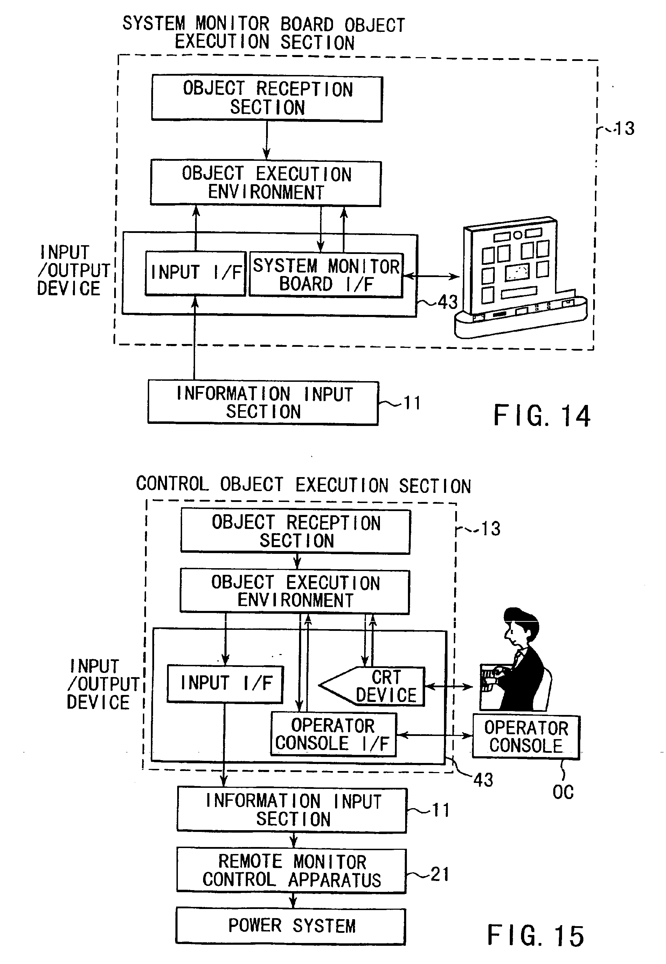

FIG. 14 shows a system monitor board (mimic board) object execution section providing a function of macro-displaying on a system monitor board the state of the power system to be monitored. This object execution section can be realized by a system having the structure as shown in FIG. 14. Specifically, in this case, the input/output device 43 shown in FIG. 6 has a function (input I/F) of taking in information from the information input section 11 and a system monitor board device including a system monitor board I/F.

FIG. 15 shows a control object execution section providing a function of remote-controlling a device which controls the power flow in the power system. The control object execution section is realized if the input/output device 43 shown in FIG. 6 is provided with an output I/F function for taking in information from the information input section 11 and outputting a control command to the information input section 11, an operator console device I/F and a CRT device. Symbol OC denotes an operator console.

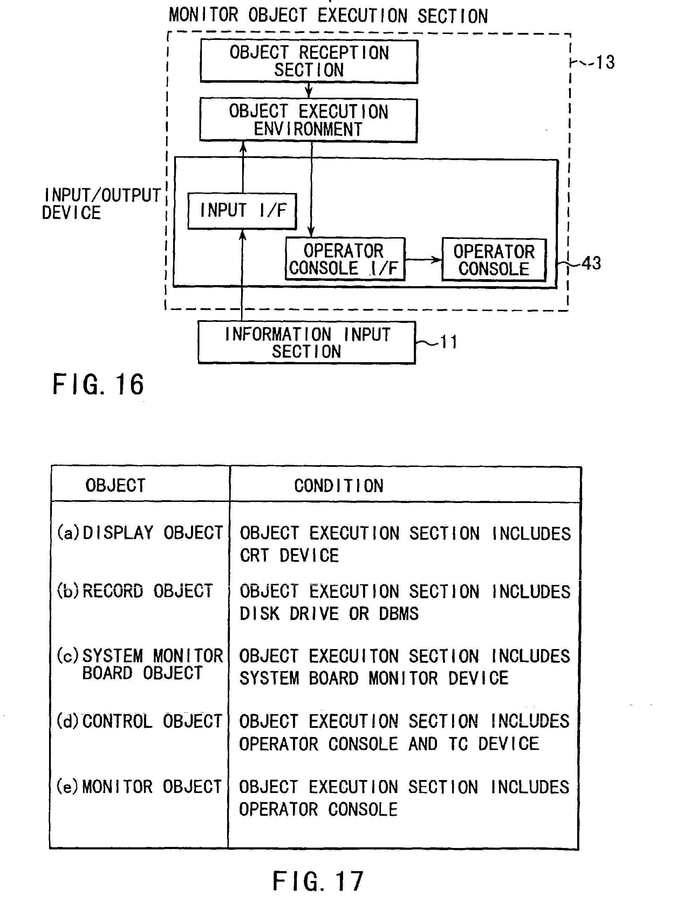

FIG. 16 shows a monitor object execution section for monitoring a status change of the power system and outputting an alarm indicating a predetermined status change. This object execution section is realized by the structure as shown in FIG. 16. Specifically, in this case, the input/output device 43 shown in FIG. 6 has a function of taking in information from the information input section 11 and an operator console device.

The object execution sections shown in FIGS. 12 to 16, before starting execution operations, check whether the conditions shown in FIG. 17 are met. If the conditions are met, the object execution sections start the execution operations.

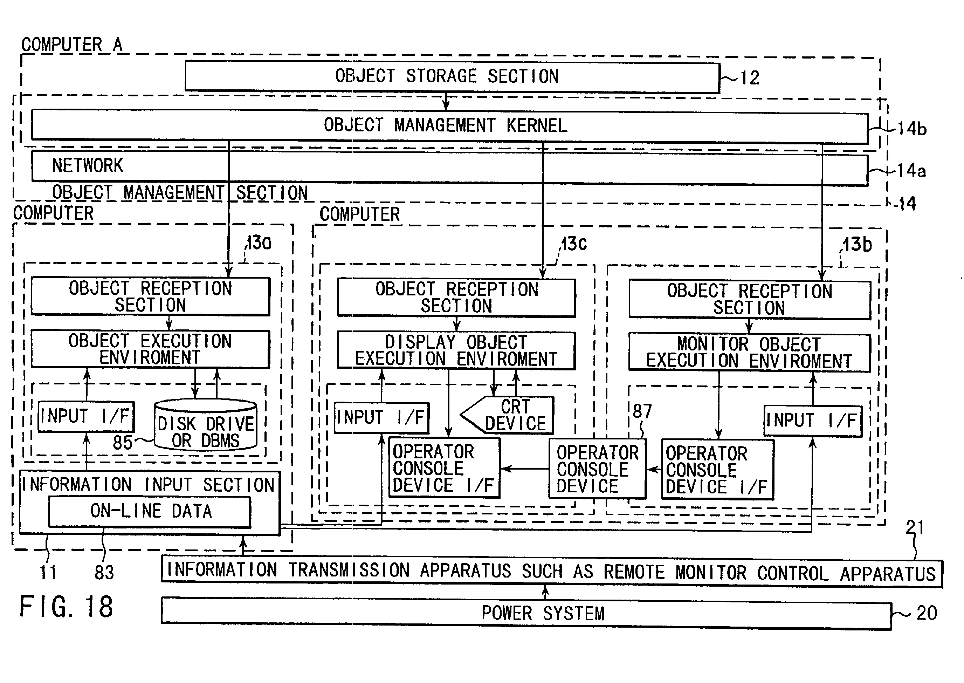

Suppose that the objects (a), (b) and (c) are applied to the power system as monitor items. FIG. 18 shows the whole concept of the monitor control system.

The [information input section 11] will now be described.

The information input section 11 inputs information of the power system, which is obtained from an information transmission device 21 such as a remote-monitor/control apparatus (remote-control apparatus), to the input/output device of each of the respective object execution sections 13 in the following manner.
1) When the execution of the information input section 11 is started, the information input section 11 begins to gather all status information of the power system.
2) The gathered information (1) is stored as on-line data 83 in the associated object.
3) Numerical information of the power system, which is periodically sent from the information transmission device 21, is stored as data 83 in the associated object.
4) After all status information of the power system is gathered, a status change in the gathered status information of the power system is monitored and the status change in information is stored as data 83 in the associated object.
5) When a request for referring to information items (2) and (3) has been issued from another object, the requested information is delivered.
6) When a request (a state request) for reporting the information status change (4) has been issued from another object, the information status change (4), if detected, reported to the origin of request (status change report).

The [record object] will now be described.

The record object is an object including both a program and data. The object execution section 13a for executing the record object has the disk drive for data storage or a database management system (DBMS). This record object is executed in the following manner.
1) The record object is executed by the object execution section 13a upon an execution start instruction from the object management section 14.
2) After the execution is started, requests for referring to all status information and all numerical information are sent to the information input section 11 at a predetermined cycle, and the obtained information is stored as a record database in the disk drive or DBM 85 within the associated object.
3) If a request for referring to the record database is issued from another object, the requested information is sent back.

The [monitor object] will now be described.

The object execution section 13b for executing the monitor object has an input/output device for input/output with the operator console device (OC) for screen call.

The monitor object is executed in the following manner.
1) The execution of the monitor object is started by the object execution section 13b upon an execution start instruction from the object management section 14.
2) After the execution is started, a status change request is issued to the information input section. The monitor object is prepared to immediately record information on a status change of the power system, if it occurs. At the same time, the monitor object waits for a screen call operation performed by the operator console device.
3) If the status change report is made from the information input section 11, a specific lamp on the operator console device 87 is turned on in accordance with the status change information and at the same time a bell or chime is sounded. Thus, an alarm on the status change of the power system is output.

The [display object] will now be described.

The object execution section 13c for executing the display object has both an input/output device for input/output with the operator console for screen call and device operations and a CRT device with a pointing device such as a mouse, or has only the CRT device with the pointing device. The display object is executed by the object execution section 13c in the following manner.
1) If a screen call is made from the operator console device 87 or pointing device, it is determined whether the object necessary for displaying the called screen is present in the associated object execution section.
2) If the object is present, the object is executed and the requested screen is displayed.
3) If the object is not present, an object call request is made to the object management section 14 in order to display the requested screen.
4) If the object management section has received the object call request, it supplies the object to the object execution section. Thereby, the object execution section executes the object, and the requested screen is displayed.

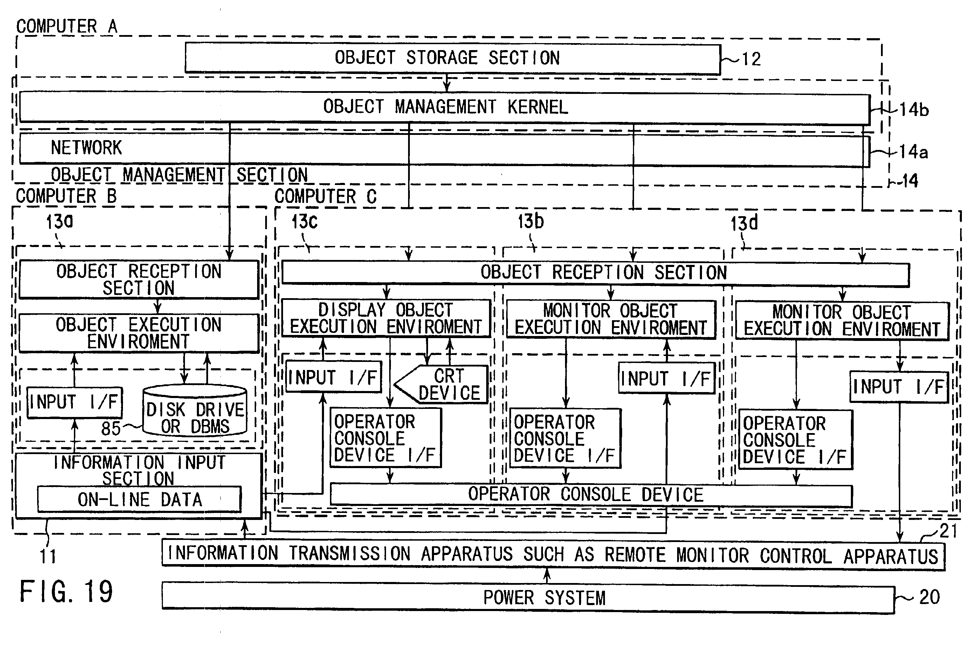

FIG. 19 shows the whole concept of the monitor control system wherein the objects (a), (b), (d) and (e) are applied to the power system as monitor items. In FIG. 19, an object execution section 13d for executing a control object is added to the system of FIG. 18. Only by this, the power system monitor system can be extended in function to the power system monitor control system with a control function.

According to this example, there is no need to prepare computer resources for executing objects for the respective functions. A non-busy computer can be dynamically used to execute the associated object. Therefore, the computer resources can be efficiently used and the system can be greatly extended.

If attention is paid to the objects, in a case where there are two or more object execution sections at the same time, the object can be executed by a plurality of computers and the reliability of the system can be enhanced. Since the objects necessary for constitution of the system can be managed at one location in a centralized manner, the cost for managing the version of objects and distribution of software is reduced. In addition, the objects to be used can be managed at one location in a centralized manner.

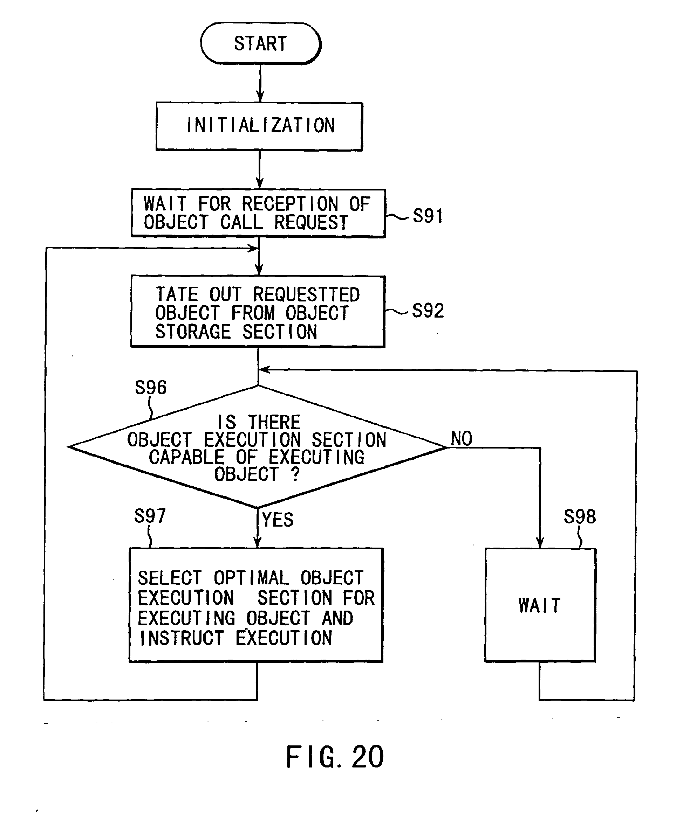

According to the present example, the object management section 14 is additionally provided with a function of dynamic selection of the object to be executed. The to-be-executed object dynamic select section for this function selects the object execution section for realizing the monitor control system. The object dynamic select section has the processing contents as shown in FIG. 20, instead of those in FIG. 10 illustrating the supply management in the object management section.

In FIG. 20, steps S91 and S92 are common to those in FIG. 10. In step S96, it is determined whether there is the object execution section capable of executing the object. If it is determined that there are two or more object execution sections, the optimal one is selected in step S97 and the selected object execution section is enabled to execute the object.

There are various criteria and methods for selecting the optimal object execution section, and the criteria and methods are not specified. Depending on conditions, one of the object execution sections may be dynamically selected. If there are no object execution section capable of executing the object, the system waits in step S98 and the process is repeated from step S91. The other operations are common to those illustrated in FIG. 10.

In this example, the optimal object execution section is selected in step S97 in FIG. 20 according to the following criteria:
(1) An object execution section with a low computer load.
(2) An object execution section with a processing performance necessary for executing the object. In this context, the processing performance refers to the processing performance of the object execution section from the standpoint of a decrease in the time from the start to end of execution, the memory capacity of the object execution section from the standpoint of the main memory capacity in order to execute the object without transferring the data to the disk, the printing speed of the peripheral device provided in the object execution section from the standpoint of a decrease in the time of printing output paper in association with the execution of the object, etc.
(3) An object execution section caching the to-be-executed object.

Except for the above points, the object management section performs the same operations as those shown in FIG. 10. The object storage section and object execution section perform the same operations as those in FIG. 10.

According to the process illustrated in FIG. 20, the object execution section can be selected with an added value. Therefore, the computer load can be averaged and the computer with high performance can be efficiently used.

Embodiments for achieving the above-described present invention will now be described with reference to the accompanying drawings. The functional elements common to those in FIG. 2 are denoted by like reference numerals, and a description thereof is omitted or limited to a minimum.

### (Embodiment 1)

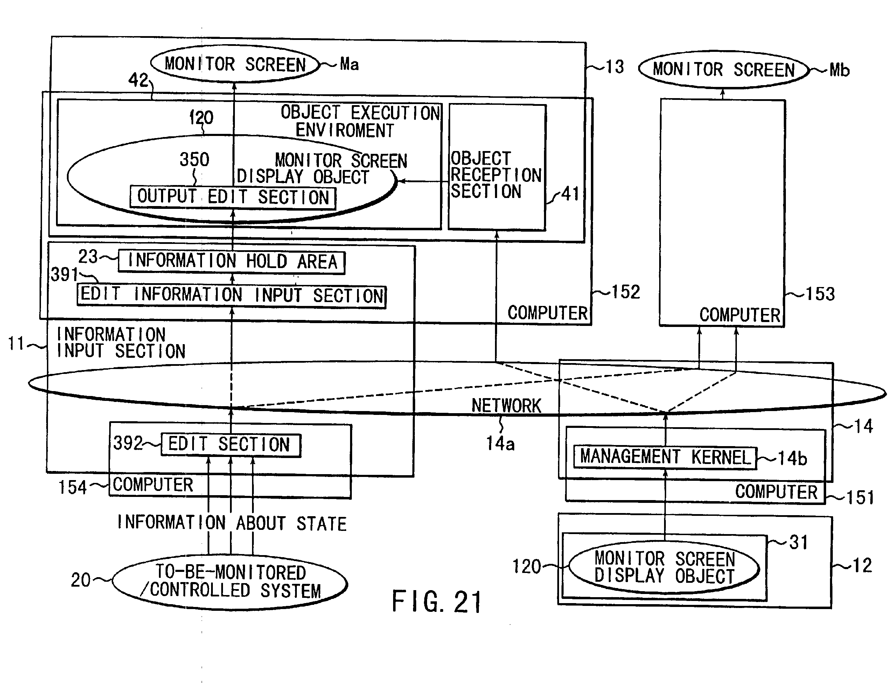

FIG. 21 shows Embodiment 1 of the invention, wherein an object execution section 13 executes an associated object so that a monitor Ma in the object execution section 13 is enabled to show the state of a to-be-monitored and controlled system 20 on a screen.

The hardware of Embodiment 1 shown in FIG. 21 will first be described. Computers 151, 152, 153 and 154 are connected to a network 14a. Each computer comprises a main memory with a capacity necessary for performing functions to be described later, a CPU of a necessary operational frequency, and an operating system. In addition, each computer performs the assigned following functions based on software.

In Example 1, the computer 151 includes a management kernel 14b for managing distribution and execution of objects. The computer 152 includes an edit information input section 391, an information storage area 23, an object execution environment 42 and an object reception section 41. The computer 154 includes an edit section 392 for editing state information input from the to-be-monitored and controlled system 20. The computer 153 has the same internal structure as the computer 152 and thus the respective elements in the computer 153 are not shown.

In order to provide the computer 151 with the management kernel 14b and to provide the computer 152 with the object reception section 41 and object execution environment 42, it should suffice to build Web server software in the computer 151, for example, and to build Web client software in the computer 152 so that communication may be established between the computers 151 and 152 (153) over the network 14a.

When the management kernel 14b has received a request from the object reception section or the management kernel 14b itself has detected a predetermined condition being satisfied, e.g. when a predetermined time has passed, a monitor screen display object 120 stored in an auxiliary memory device (hereinafter referred to as "disk") 31 in the object storage section 12 (described later) is automatically read out and distributed to the object reception section 41 over the network 14a.

A screen monitor Ma (Mb) (corresponding to the CRT device in FIG. 12) constitutes a part of the object execution section 13. The screen monitor Ma (Mb) displays, in the form of screen images, the information relating to the state of the to-be-monitored and controlled system 20, which has been output from an output edit section 350 of the computer 152 (153). Although the edit section 392 and the edit information input section 391 and information storage area 23 are provided in different computers, these perform the functions of the information input section 11 shown in FIG. 2.

The object section 41, object execution environment 42 and screen monitor Ma constitute the object execution section 13. The management kernel 14b and network 14a constitute the object management section 14.

The operation of Embodiment 1 will now be described. Information indicating the state of the to-be-monitored and controlled system 20 is input to the edit section 392 of the computer 154. The information indicating the state of the system 20 may be input by any method. For example, digital signals, analog signals, numerical information or contact information is input periodically or at the time of change of state by wired or wireless transmission.

The edit section 392 edits the input state information and sends the edited information to the edit information input section 391 of computer 152 over the network 14a. The edit information input section 391 stores the sent edit information in the information storage area 23. The object reception section 41 provided in the computer 152 receives the monitor screen display object 120 from the management kernel 14b over the network 14a and has the object 120 executed in the object execution environment 42.

If the monitor screen display object 120 is executed in the object execution environment 42, the output edit section 350 takes in the edit information from the information area 23 (i.e. edit information obtained by editing the information indicating the state of the to-be-monitored and controlled system 20), edits the information as screen information, and outputs the screen information. As a result, the screen monitor Ma displays a monitor screen.

The monitor screen displays information in the form of text message, figure, table or moving picture so as to make recognizable the state of the system 20, presence and absence of abnormality and the occurrence of events. The display may be updated periodically, at the time of change of state, or at the time of request. The details of the monitor screen are not specified.

The above description is directed to the case of executing the monitor screen display object 120 on the computer 152. On the computer 153, too, the monitor screen display object 120 is similarly executed.

In Embodiment 1 of FIG. 21, the case were the monitor screen is displayed on the screen monitor Ma. However, modifications may be made without departing from the spirit of the invention. For example, the state of the to-be-monitored and controlled system 20 may be displayed on a screen or a mosaic-board display, the state of the system 20 may be indicated by voice by using a voice output device, or the state of the system 20 may be indicated by an alarm. If the objects are constructed accordingly, each case can be realized based on the same function.

As has been described above, according to Embodiment 1 shown in FIG. 21, the monitor screen can be newly displayed on the screen monitor Ma, Mb only by adding software for monitor screen display to the disk 31 of the object storage section 12. There is no need to newly prepare a memory for storing the monitor screen display software and build it in each computer 152, 153. Therefore, the technique of Embodiment 1 is very advantageous.

### (Embodiment 2)

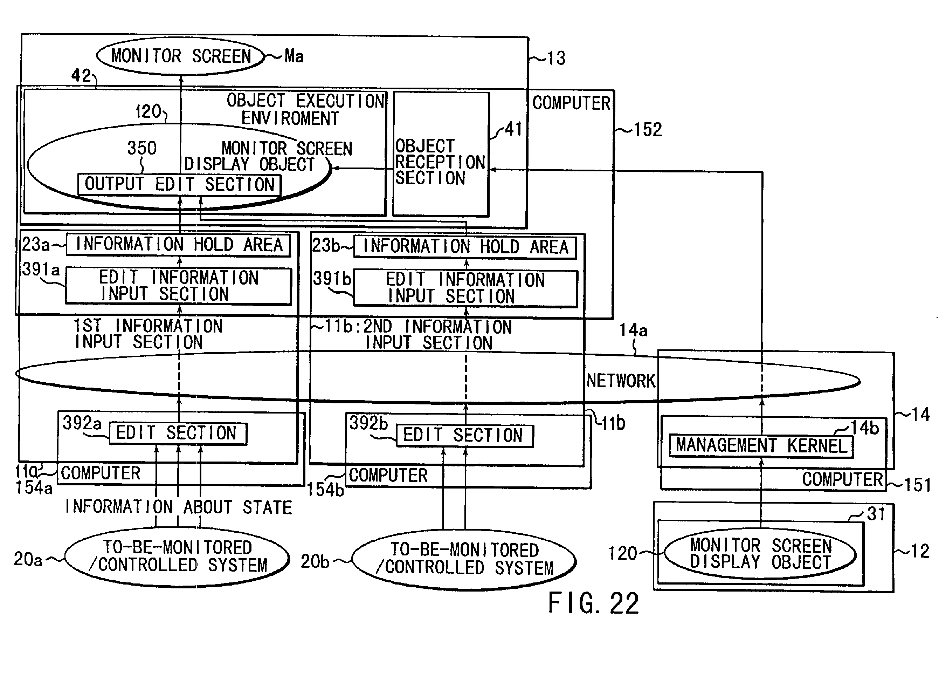

FIG. 22 shows the structure of a monitor control system according to Embodiment 2 of the present invention. In Embodiment 1 shown in FIG. 21, only one information input section 11 is provided. In Embodiment 2, however, two information input sections (11a, 11b) are provided. Thus, Embodiment 2 differs from Embodiment 1 in that only one object execution section is provided for the two information input sections. The elements common to those shown in FIG. 21 are denoted by like reference numerals and a description thereof is omitted. However, the common parts of the two information input sections are distinguished by adding small letters "a" and "b" to the numerals.

The output edit section 350 of the monitor screen display object 120 takes in, from the information storage areas 23a and 23b of two information input sections 11a and 11b, the edit information indicating the state of the to-be-monitored systems 20a and 20b. Thus, the information about the states of the plural systems is output to the single monitor in the form of a screen image, a picture, a mosaic plate, voice or alarm. It is to be noted that the screen image means that contents of display is freeze frame picture in principle. Further, the picture means that contents of display is a moving picture such as an animation picture in principle.

The structures and operations of the other parts are common to those of the system shown in FIG. 21.

According to Embodiment 2 shown in FIG. 22, when monitor screens of the two to-be-monitored systems 20a and 20b are to be displayed on the screen monitor Ma, it should suffice to add software for monitor screen display to the disk 31 of the object storage section 12. There is no need to newly prepare a memory for storing the monitor screen display software and build it in the computer 152. Therefore, the technique of Embodiment 2 is very advantageous.

### (Embodiment 3)

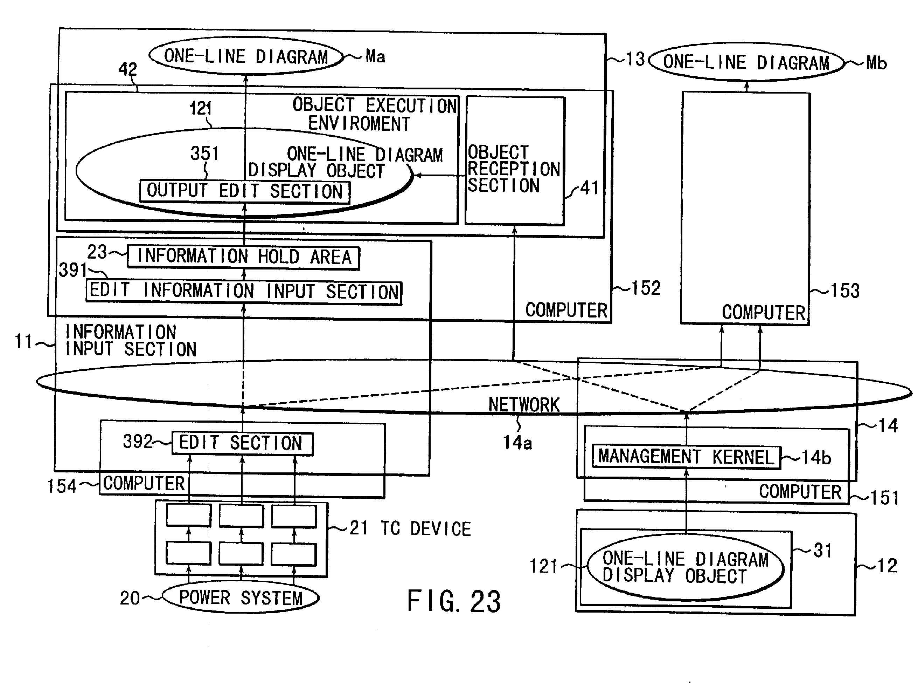

FIG. 23 shows the structure of an exemplary : form of the invention. In the said exemplary, form of the invention, the to-be-monitored and controlled system 20 is a power system. A telecontrol device 21 is provided at the front stage of the information input section 11, and the disk 31 stores a one-line diagram display object 121 of the power system.

The said exemplary, form of the invention has the same structure as Embodiment 1 (FIG. 21) except that the information about the state of the power system 20 to be monitored and controlled is input to the edit section 392 of information input section 11 via TC 21 and that the one-line diagram display object 121 is stored in the disk 31 and executed in the object execution environment 42.

In this context, the one-line diagram refers to a diagram showing the on/off state of switches of the power system and status information on the protection relay devices by shapes and colors of symbols and letters, as well as a diagram showing the states of effective/non-effective power of tide of transmission lines and transformers or the voltage of the bus. The power system is expressed in the form of a one-line diagram. Although one-line diagrams are generally adopted as schematics, other schematics such as three-line diagrams may be used.

In general, the power system 20 to be monitored and controlled comprises power system devices arranged over a wide area. The information about the states of respective power system devices is gathered in units of a substation or a power plant and sent to the central computer 154 via the TC 21. The edit section 392 edits the information on the state of each power system device periodically or each time a change of the state has occurred.

In this context, the information on the state of each power system device refers to numerical information on the on/off states (logic "1" or "0" signal) of switches such as breakers or disconnectors, the states of effective/non-effective power of tide of transmission lines and transformers or the voltage of the bus. The edit section 392 sends the edit information to the edit information input section 391 via the network 14a, and the edit information input section 391 stores the sent information in the information storage area 23.

The management kernel 14b reads out the one-line diagram display object 121 from the disk 31 and supplies the object 121 to the object reception section 41 via the network 14a. The object reception section 41 has the object 121 executed in the object in the object execution environment 42.

If the one-line diagram display object 121 is executed by the object execution environment 42, the output edit section 351 takes in the edit information from the information storage area 23, edits the information into screen information to be displayed as a one-line diagram, and outputs it to the screen monitor Ma. Thus, the one-line diagram is displayed on the screen monitor Ma.

The screen image (color, numerical information, etc. of the device symbols) of the one-line diagram may be updated periodically or in accordance with a change in the state of the power system 20. The method of updating is not specified.

The above description is directed to the case of executing the one-line diagram display object 121 on the computer 152. On the computer 153, too, the one-line diagram display object 120 is similarly executed.

According to said exemplary form the invention, the one-line diagram can be newly displayed on the screen monitor Ma, Mb only by adding the one-line diagram display object 121 to the object storage section 12. There is no need to newly prepare a memory for storing the one-line diagram display software and build it in each computer 152, 153. Therefore, the technique of said exemplary form the invention is very advantageous.

### (Embodiment 3)

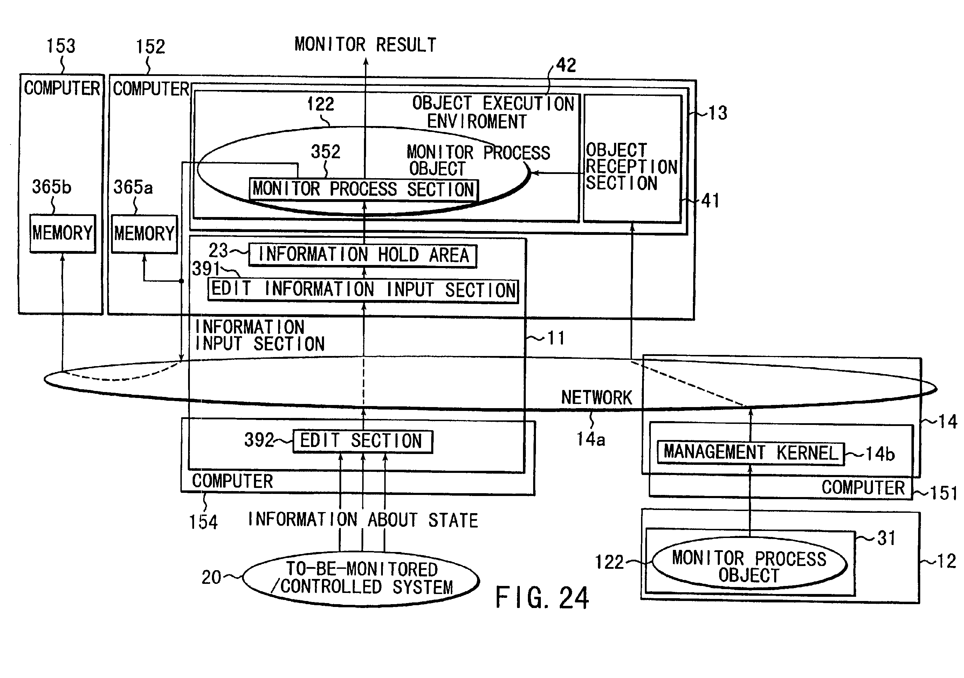

FIG. 24 shows the structure of Embodiment 3 of the invention. In Embodiment 3, the object execution 15 section 13 executes the object and monitors the to-be-monitored system. The object execution section 13 not only outputs the monitor result, but also stores it in the memory. In FIG. 24, the computers 152 and 153 are provided with memories 365a and 365b for storing the monitor results. In the other respects Embodiment 4 is substantially the same as Embodiment 1 (FIG. 21).

The management kernel 14b reads out a monitor process object 122 stored in the disk 31 and supplies the object 122 to the object reception section 41 over the network 14a. The object reception section 41 has the supplied monitor process object 122 executed in the object execution environment 42.

If the monitor process object 122 has been executed in the object execution environment 42, a monitor process section 352 takes in, from the information storage area 23, edit information obtained by editing the information about the state of the to-be-monitored system 20, and monitor-processes the taken-in information.

In the monitor process, for example, a power flow value of the transmission line of the power system is read out from the information storage area 23 and compared with an upper limit value. If the power flow value is higher than the upper limit value, alarm information is created. If the power flow value is not higher than the upper limit value, information indicating "no abnormality" is created as a monitor result.

The above description has been directed to the case of monitoring power flow in the transmission line. When a monitor result is created by comparing a voltage value of the bus with upper and lower limit values, any method can be adopted without departing from the spirit of the invention. For example, the presence/absence of an accident is checked and thus a monitor result is created.

The monitor process section 352 stores the monitor result in a memory 365a in the computer 152 or in a memory 365b in the computer 153, and also delivers the monitor result to another destination. In this case, the monitor result may be delivered to some other software, computer or system using the monitor result. The destination of the delivered result is not specified.

According to Embodiment 3 shown in FIG. 24, when the computer 152 (153) executes the monitor function, it should suffice to add the monitor process object 122 to the object storage section 12. There is no need to prepare a memory for storing the monitor process software and build it in the computer 152 (153). Therefore, the technique of Embodiment 4 is very advantageous.

### (Embodiment 4)

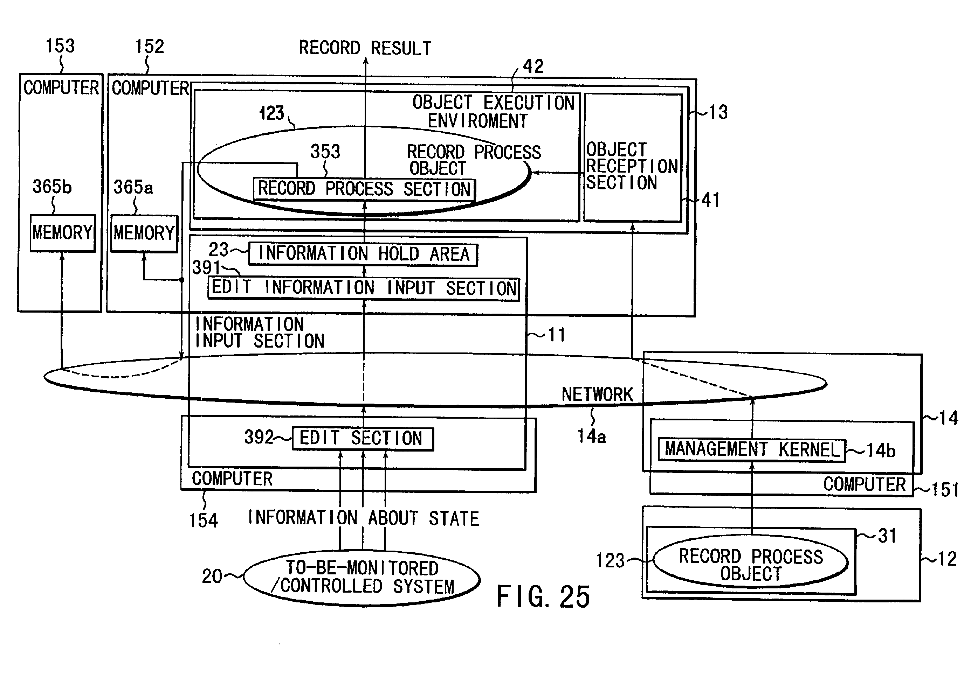

FIG. 25 shows the structure of Embodiment 4 of the invention. In Embodiment 4, if the object execution section 13 executes the object, it records the state of the to-be-monitored and controlled system and outputs the record result or stores it in a memory.

Embodiment 4 will now be described with reference to FIG. 25. In FIG. 25, the monitor process object 122 shown in FIG. 24, which is stored in the disk 31, is replaced with a record process object 123. In the other respects Embodiment 4 is common to Embodiment 3, and a description of common parts is omitted.

In Embodiment 4, if the record process object 123 has been executed in the object execution environment 42, a record process section 353 takes in, from the information storage area 23, edit information obtained by editing the information about the state of the to-be-monitored system 20, and record-processes the taken-in information.

In the record process, for example, output values of respective generators of the power system are read out from the information storage area 23 and summed in every hour, and thus a record result is created.

The above description is directed to the case of recording a sum output value of generators in every hour. However, it is possible, for example, to create a long-term or short-term record result by gathering various information periodically, or to create a record result by periodically storing information on the state of the monitored system in a time-sequential manner. Various methods of creating record results may be adopted without departing from the spirit of the invention.

The record process section 353 stores the record result in the memory 365a, 365b or outputs the record result to some other destination. In this case, like Embodiment 4 shown in FIG. 23, the monitor result may be delivered to some other software, computer or system using the record result, or the data is recorded by a data logger, etc. The destination of the delivered result is not specified.

According to Embodiment 4, shown in FIG. 25, when the computer 152 executes the record process, it should suffice to add the record process object 123 to the object storage section 12. There is no need to prepare a memory for storing the record process software and build it in the computer 152. Therefore, the technique of Embodiment 4 is very advantageous.

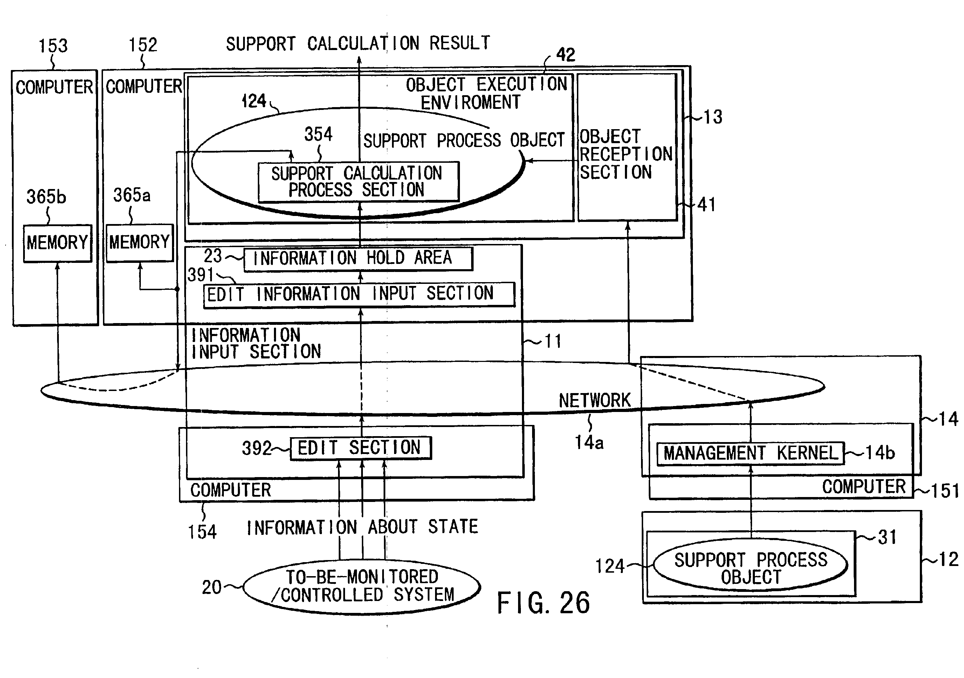

FIG. 26 shows the structure of a further examplary : form of the invention. If the object is executed by the object execution section 13, a support calculation is made on the basis of the state of the to-be-monitored and controlled and a support calculation result is output or stored in the memory. The structure of said further exemplary form of the invention is the same as that of Embodiment 3, except that a support process object 124 in lieu of the monitor process object 122 is stored in the disk 31.

The management kernel 14b reads out the support process object 124 stored in the disk 31 and delivers the object 124 to the object reception section 41 over the network 14a. The object reception section 41 has the delivered support process object 124 executed in the object execution environment 42.

If the support process object 124 is executed in the object execution environment 42, the support process section 354 takes in, from the information storage area 23, edit information obtained by editing information about the state of the system 20. The support process section 354 then executes the support calculation.

In the support calculation, for example, a power flow value of the transmission line of the power system is read out and compared with an upper limit value. If the power flow value exceeds the upper limit value, a support calculation result is prepared for the operator to calculate an output status change value for the generator so that the power flow value may decrease below the upper limit value.

The above description is directed to the case of performing the support calculation at the time of overloading of the power system. However, various methods of preparing the support calculation result may be adopted without departing from the spirit of the invention. For example, a support calculation result may be obtained by preparing an operation procedure for recovering a power failure of the power system. In addition, a support calculation result may be obtained by determining failing equipment, in case of an accident in the power system, from operational information about the state of switches, protection relays, etc.

The support process section 354 stores the support calculation result in the memory 365a, 365b or outputs the support calculation result to some other destination. In this case, the support process result may be delivered to some other software, computer or system using the support calculation result.

According to said exemplary form of the invention shown in FIG. 26, when the computer 152 executes the support process, it should suffice to add the support process object 124 to the object storage section 12. There is no need to prepare a memory for storing the support process software and build it in the computer 152. Therefore, the technique of said exemplary form of the invention is very advantageous.

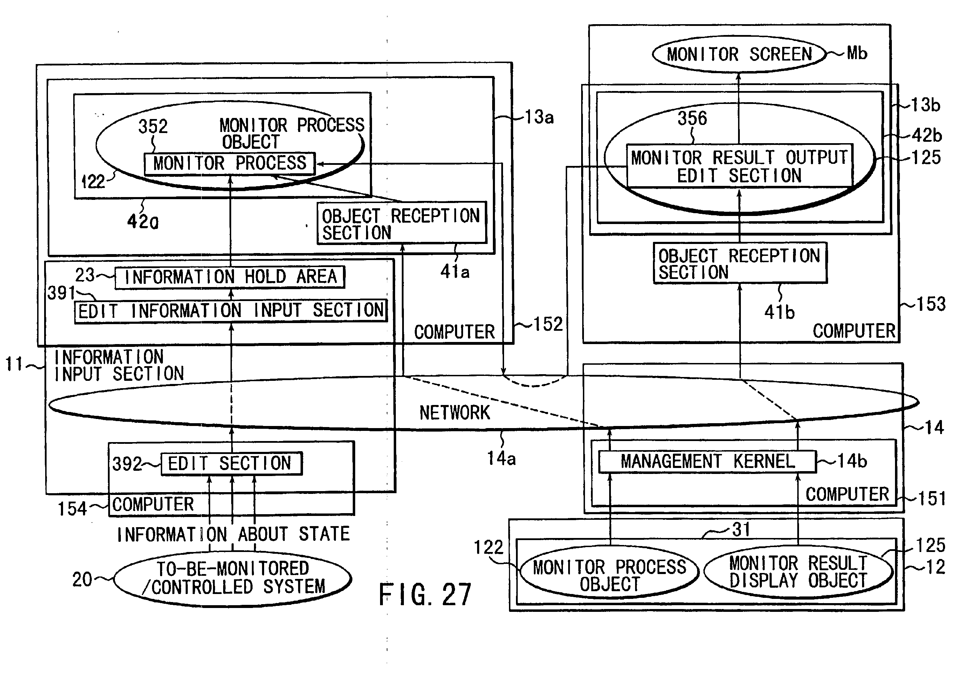

FIG. 27 shows the structure of a further exemplary : form of the invention according to the invention. There are provided two object execution sections (first object execution section 13a and second object execution section 13b). The first object execution section 13a executes an associated object and outputs a monitor process result. The second object execution section executes an associated object and displays a monitor process result in the form of a screen image. In the other respects, said exemplary form of the invention is common to Embodiment 1 (FIG. 21), and a description of common parts is omitted.

In FIG. 27, the computer 152 includes an edit information input section 391, an information storage area 23, an object execution environment 42a and an object reception section 41a. The computer 153 includes an object reception section 41b and an object execution environment 42b. The disk 31 stores a monitor process object 122 and a monitor screen display object 125.

The object reception section 41a and object execution environment 42a constitute the first object execution section 13a, and the object reception section 41b and object execution environment 42b constitute the second object execution section 13b. Information about the state of the to-be-monitored and controlled system 20 is input to the edit section 392. The edit section 392 edits the input information and outputs the edit information to the edit information input section 391 over the network 14a.

The edit information input section 391 stores the edit information in the information storage area 23, like Embodiment 1 of FIG. 21. The management kernel 14b reads out the monitor process object 122 from the disk 31 and supplies it to the first object reception section 41a over the network 14a.

The first object reception section 41a has the supplied monitor process object 122 executed in the first object execution environment 42a. If the monitor process object 122 is executed in the first object execution environment 42a, the environment 42a takes in, from the information storage area 23, edit information obtained by editing information about the state of the system 20, monitors the taken-in information, and outputs the monitor result. These operations are common to those of the embodiment of FIG. 23.

In addition, the management kernel 14b reads out the monitor result display object 125 from the disk 31 and supplies it to the second object reception section 41b over the network 14a. The second object reception section 41b has the supplied monitor result display object 125 executed in the second object execution environment 42b.

If the monitor result display object 125 is executed in the second object execution environment 42b, a monitor result output edit section 356 takes in a monitor result from the monitor process section 352 with respect to the monitor process object 122 executed in the first object execution environment 42a. The monitor result output edit section 356 forms, on the basis of the monitor result, screen information to be displayed on the screen. The screen information is output to the screen monitor Mb. The operations of the management kernel 14b, object reception section 41b, object execution environment 42b and screen monitor Mb are the same as those illustrated in FIG. 3.

As regards said exemplary : form of the invention shown in FIG. 27, the above description is directed to the case of displaying the monitor result on the screen monitor Mb.. However, various modes of display may be adopted without departing from the spirit of the invention. For example, the state of the system 20 may be displayed on a screen or a mosaic-plate display, or the state of the system 20 may be indicated by voice, using a voice output device, or by an alarm. Needless to say, these modes can be realized by similar operations.

According to said exemplary : form of the invention shown in FIG. 27, when the computer 152 executes the monitor process and the screen monitor Mb of the other computer 153 displays the monitor result, it should suffice to add the monitor process object 122 and monitor result display object 125 to the disk 31 of the object storage section 12. There is no need to provide the computer 152 with a memory for storing the monitor process software and to provide the computer 153 with a memory for storing the monitor result display software, and to install each software in the associated memory. Therefore, the technique of said exemplary form of the invention is very advantageous.

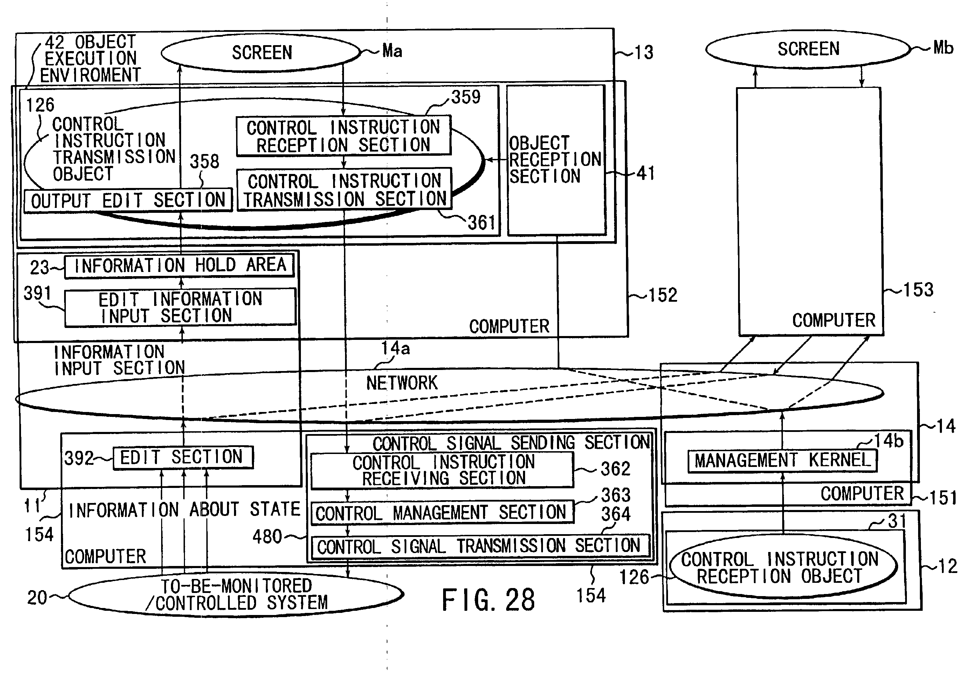

FIG. 28 shows the structure of an exemplary : form of the invention. Said exemplary form of the invention is the same as Embodiment 1 of FIG. 1, except that a control instruction reception object 126 is executed by the object execution section 13 and a control signal transmission section 480 for sending a control signal to the system 20 is added.

In FIG. 28, the computer 154 includes, in addition to the edit section 392, a control signal sending section 480 comprising a control instruction reception section 362, a control management section 363 and a control signal transmission section 364. The computer 152 comprises an edit information input section 391, an information storage area 23, an object execution environment 42 and an object reception section 41. The object execution environment 42 includes, in addition to an output edit section 358, a control instruction reception section 359 and a control instruction transmission section 361.

The control instruction reception section 359 may receive an instruction from the operator through the screen monitor Ma. In other cases, control software such as voltage control software provided near the to-be-monitored and controlled system or computer 152 may automatically calculate a control amount and supplies a control signal directly to the control instruction reception section 359, without an instruction by the operator. The object reception section 41, object execution environment 42 and screen monitor Ma constitute the object execution section 13. The disk 31 stores the control instruction reception object 126.

The management kernel 14b reads out the control instruction reception object 126 from the disk 31 and supplies it to the object reception section 41 over the network 14a. The object reception section 41 has the supplied control instruction reception object 126 executed in the object execution environment 42. These operations are the same as those in the embodiment of FIG. 21.

If the control instruction reception object 126 is executed by the object execution environment 42, the display process section 358 takes in the edit information about the state of the to-be-monitored and controlled system 20 from the information storage area 23, edits the information into screen information, and outputs it to the screen monitor Ma.

The control instruction reception section 359 receives a control instruction input by the operator through the screen monitor Ma and outputs it to the control instruction transmission section 361. The control instruction transmission section 361 transmits the input control instruction information to the control instruction receiving section 362 of control signal sending section 480 over the network 14a.

The control instruction receiving section 362 outputs the control instruction information to the control management section 363, which then edits a control signal from the input control instruction information and outputs it to the control signal transmission section 364. The control signal transmission section 364 transmits the control signal to the system 20 and controls it.

The above description has been directed to the case where the control instruction reception object 126 comprises the display process section 358, control instruction reception section 359 and control instruction transmission section 361. However, the object 126 may be in any mode if the state of the system 20 is displayed on the screen monitor Ma and the control instruction is received from the screen monitor Ma.

In the above description, the control signal sending section 480 comprises the control instruction receiving section 362, control management section 363, and control signal transmission section 364. However, the construction of the control signal sending section 480 is not limited if the control instruction information is converted to a control signal and the control signal is sent to the system 20 to control the system 20.

Using the computer 153 and screen monitor Mb, too, the same control can be carried out. In this embodiment, the control signal sending section 480 is provided in the computer 154 by the software process. However, instead of the control signal sending section 480 being provided in the computer 154, another computer similar to the computer 152 connected to the network may be provided and the control signal sending section 480 may be provided in this computer.

According to said exemplary : form of the invention of FIG. 28, when a control reception function is to be newly added to the computer 152 or 153, it should suffice if the control instruction reception object 126 is added to the disk 31 of object storage section 12. There is no need to provide the computer 152 or 153 with a memory for storing the software for the control instruction reception function and to install the software in the memory. Therefore, the technique of said exemplary : form of the invention is very advantageous.

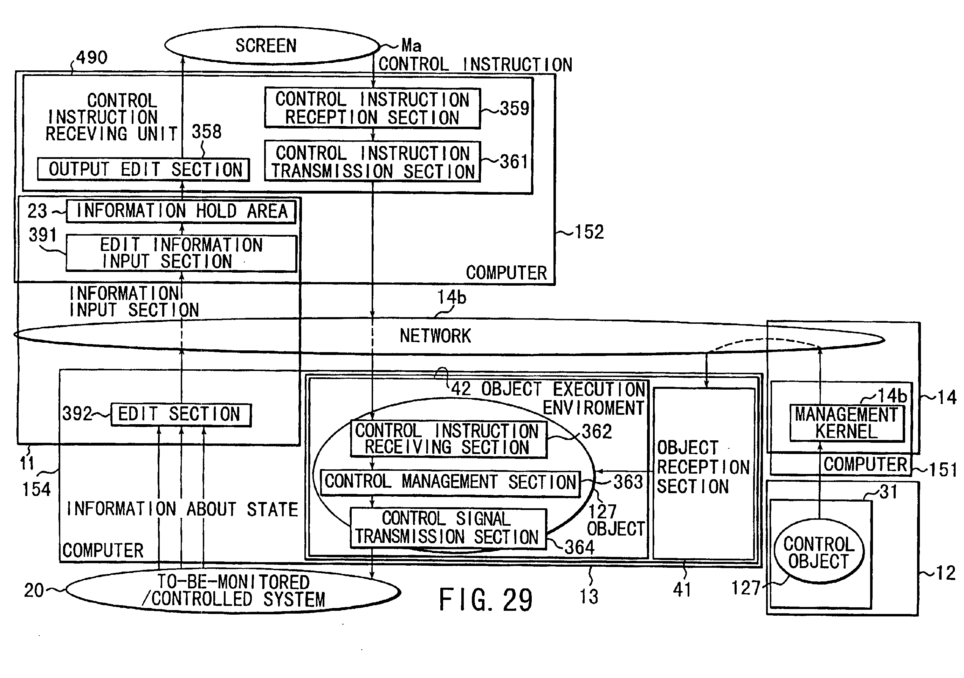

FIG. 29 shows the structure of a further exemplary, form of the invention. Said exemplary : form of the invention is substantially the same as the exemplary form of FIG. 28, except that the object execution section 13 is shifted from the computer 152 to computer 154, the object to be executed in the object execution section 13 is replaced with a control object 127, and a control instruction reception section 490 is added to the computer 152.

In FIG. 29, the computer 154 is provided with the edit section 392 as well as an object execution environment 42 and an object reception section 41. The computer 152 is provided with the edit information input section 391 and information storage area 23 as well as a control instruction reception unit 490. The control instruction reception unit 490 comprises the display process section 358, control instruction reception section 359 and control instruction transmission section 361. The computer 151 includes the management kernel 14b, and the disk 31 stores the control object 127.

Information about the state of the system 20 is input to the edit section 392. The edit section 392 edits the input information and outputs the edit information to the edit information input section 391 over the network 14a. The edit information input section 391 stores the input edit information in the information storage area 23, according to the same operations as described in connection with the embodiment of FIG. 3.

The display process section 358 takes in, from the information storage area 23, the edit information about the state of the system 20, edits it into screen data and output the screen data to the screen monitor Ma. The control instruction reception section 359 receives the control instruction from the screen monitor Ma and outputs the control instruction information to the control instruction transmission section 361. The control instruction transmission section 361 transmits the control instruction information to the object execution section 13 in the computer 154 over the network 14a.

The above description is directed to the case where the control instruction receiving unit 490 comprises the display process section 358, control instruction reception section 359 and control instruction transmission section 361. However, the construction of the control instruction receiving unit 490 is not limited if the state of the system 20 is displayed on the screen monitor Ma and the control instruction is received from the screen monitor Ma.

The management kernel 14b reads out the control object 127 from the disk 31 and supplies it to the object reception section 41 over the network 14a. The object reception section 41 has the supplied control object 127 executed in the object execution environment 42. These operations are the same as those in the embodiment of FIG. 21.

If the control object 127 is executed by the object execution environment 42, the control instruction receiving section 362 receives the control instruction information from the control instruction transmission section 361 and outputs the received information to the control management section 363. The control management section 363 then edits a control signal from the input control instruction information and outputs it to the control signal transmission section 364. The control signal transmission section 364 transmits the control signal to the system 20 and controls it.

The above description is directed to the case where the control object 127 comprises the control instruction receiving section 362, control management section 363, and control signal transmission section 364. However, the construction of the control object 127 is not limited if the control instruction information is input and the control signal is output to the system to control the same.

According to the exemplary form of FIG. 29, when a control function is to be newly added to the computer 154, it should suffice if the control object 127 is added to the disk 31 of object storage section 12. There is no need to provide the computer 154 with a memory for storing the software for the control function and to install the software in the memory. Therefore, the technique of said exemplary form is very advantageous.

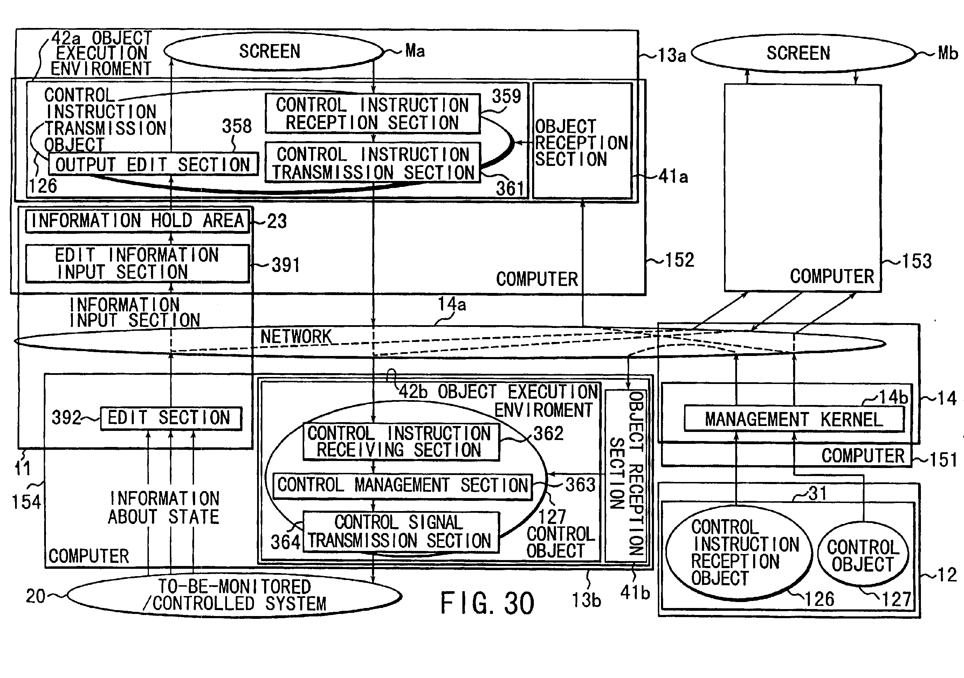

FIG. 30 shows the structure of a further exemplary : form of the invention. In FIG. 30, the computer 154 comprises the edit section 392 as well as an object execution environment 42b and an object reception section 41b. The computer 152 comprises the edit information input section 391, the information storage area 23, an object execution environment 42a, and an object reception section 41a.

The computer 151 includes the management kernel 14b. The disk 31 stores the control instruction reception object 126 and control object 127. The object reception section 41a, object execution environment 42a and screen monitor Ma constitute a first object execution section 13a. The object execution environment 42b and object reception section 41b constitute a second object execution section 13b. The object management section 14 is the same as that described in the preceding embodiment.

Information about the state of the system 20 is input to the edit section 392. The edit section 392 edits the input information and outputs the edit information to the edit information input section 391 over the network 14a. The edit information input section 391 stores the input edit information in the information storage area 23, according to the same operations as described with reference to FIG. 21.

The management kernel 14b reads out the control instruction reception object 126 from the disk 31 and supplies it to the object reception section 41a over the network 14a. The object reception section 41a has the supplied control instruction reception object 126 executed in the object execution environment 42a, according to the same operations as illustrated in FIG. 3.

If the control instruction reception object 126 is executed by the object execution environment 42a, the display process section 358 takes in the edit information about the state of the to-be-monitored and controlled system 20 from the information storage area 23, edits the information into screen information, and outputs it to the screen monitor Ma. The control instruction reception section 359 receives the control instruction from the operator through the screen monitor Ma and outputs the control instruction information to the control instruction transmission section 361. The transmission section 361 transmits the input control instruction information.

If the control object 127 is executed in the object execution environment 42b, the control instruction receiving section 362 receives the control instruction information from the control instruction transmission section 361 and outputs the received control instruction information to the control management section. The control management section 363 then edits a control signal from the input control instruction information and outputs it to the control signal transmission section 364. The control signal transmission section 364 transmits the control signal to the system 20 and controls it.

The above description has been directed to the case where the control instruction reception object 126 comprises the display process section 358, control instruction reception section 359 and control instruction transmission section 361. However, the object 126 may be in any mode if the state of the system 20 is displayed on the screen monitor Ma and the control instruction is received from the screen monitor Ma.

The management kernel 14b reads out the control object 127 from the disk 31 and supplies it to the object reception section 41b over the network 14a. The object reception section 41b has the supplied control object 348 executed in the object execution environment 42b, according the same operations as described with reference to FIG. 3.

The above description is directed to the case where the control object 127 comprises the control instruction receiving section 362, control management section 363, and control signal transmission section 364. However, the construction of the control object 127 is not limited if the control instruction information is input and the control signal is output to the system to control the same.

In the above description, the control instruction is received from the screen monitor Ma. However, the control instruction may be received from the screen monitor Mb by the same operations.

According to the exemplary : form shown in FIG. 30, when a control reception function and a control function are to be newly added to the computers 152, 153 and 154, it should suffice if the control instruction reception object 126 and control object 127 are added to the disk 31 of object storage section 12. Thus, the computers 152 and 153 can receive the control instruction. Therefore, the technique of said exemplary form is very advantageous.

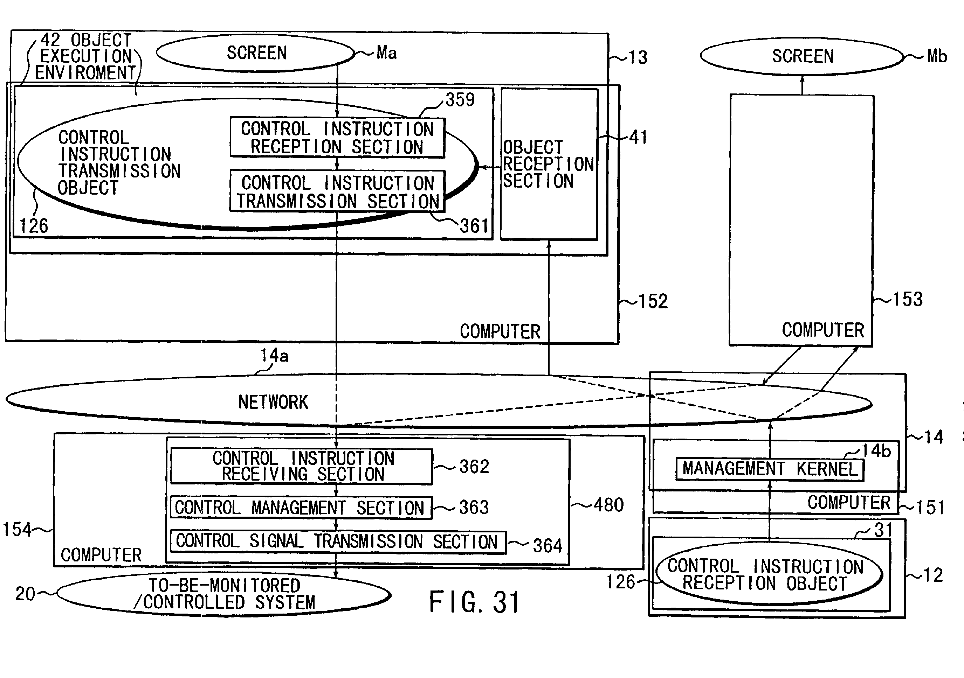

FIG. 31 shows the structure of a further exemplary form of the invention. Said exemplary form has substantially the same structure as the exemplary : form FIG. 28) except that the information input section 11 is not provided and the display process section 358 is not provided in a control instruction reception object 126.

In FIG. 31, the computer 154 includes a control signal sending section 480 comprising a control instruction reception section 362, a control management section 363 and a control signal transmission section 364. The computer 152 comprises an object execution environment 42 and an object reception section 41. The computer 151 comprises the management kernel 14b, and the disk 31 stores the control instruction reception object 126.

The management kernel 14b reads out the control instruction reception object 126 from the disk 31 and supplies it to the object reception section 41 over the network 14a. The object reception section 41 has the supplied control instruction reception object 126 executed in the object execution environment 42. These operations are the same as those in the embodiment of FIG. 21.

If the control instruction reception object 126 is executed by the object execution environment 42, the control instruction reception section 359 receives a control instruction input through the screen monitor Ma and outputs it to the control instruction transmission section 361. The control instruction transmission section 361 transmits the input control instruction information to the control instruction receiving section 362.

The above description has been directed to the case where the control instruction reception object 126 comprises the control instruction reception section 359 and control instruction transmission section 361. However, the object 126 may be in any mode if the control instruction is received from the screen monitor Ma and the control instruction information is output.

The control instruction receiving section 362 receives the control instruction information from the control instruction transmission section 361 and outputs it to the control management section 363. The control management section 363 then edits a control signal from the input control instruction information and outputs it to the control signal transmission section 364. Thus the control signal transmission section 480 transmits the control signal to the system 20 and controls it.

In the above description, the control signal sending section 480 comprises the control instruction receiving section 362, control management section 363, and control signal transmission section 364. However, the construction of the control signal sending section 480 is not limited if the control instruction information is converted to a control signal and the control signal is sent to the system 20 to control the same. In addition, using the computer 153 and screen monitor Mb, too, the same control can be carried out.

According to Embodiment 11 shown in FIG. 31, when a control reception function is to be newly added to the computer 152 or 153, it should suffice if the control instruction reception object 126 is added to the disk 31 of object storage section 12. There is no need to provide the computer 152 or 153 with a memory for storing the software for the control instruction reception function and to install the software in the memory. Therefore, the technique of Embodiment 11 is very advantageous.

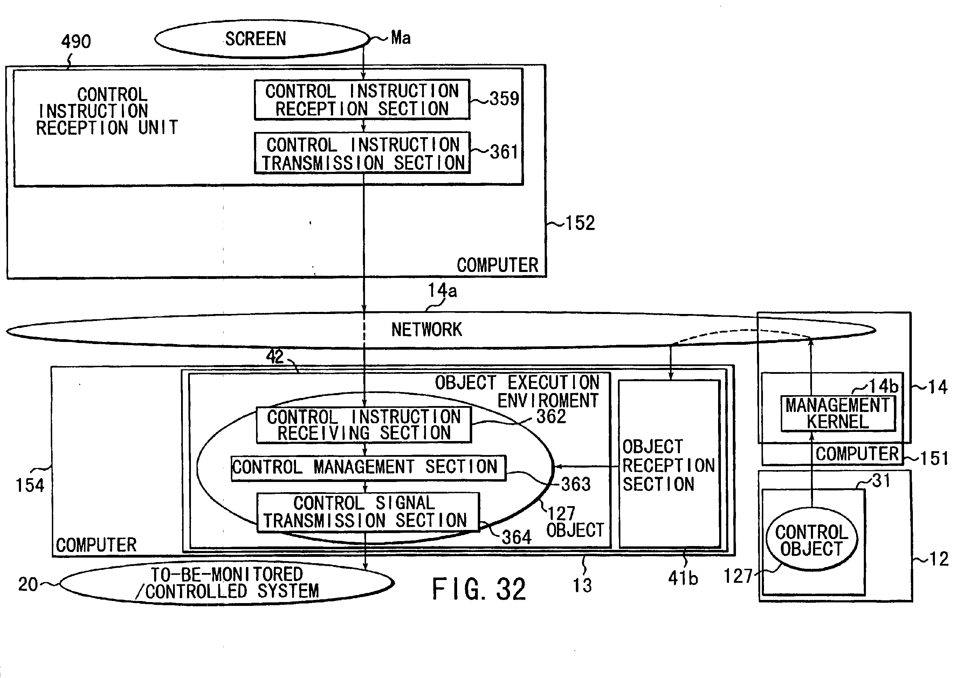

FIG. 32 shows the structure of a further exemplary : form of the invention. In said exemplary : form, the information input section 11 is not provided and the display process section 358 is not provided in the object execution environment 42.

In FIG. 32, the computer 154 does not include the information input section 11, but comprises an object execution environment 42 and an object reception section 41b. The computer 152 includes a control instruction receiving unit 490 comprising a control instruction reception section 359 and a control instruction transmission section 361. The computer 151 comprises the management kernel 14b, and the disk 31 stores the control object 127.

The control instruction reception section 359 of control instruction receiving unit 490 receives a control instruction input through the screen monitor Ma and outputs it to the control instruction transmission section 361. The control instruction transmission section 361 transmits the input control instruction information.

The above description has been directed to the case where the control instruction receiving unit 490 comprises the control instruction reception section 359 and control instruction transmission section 361. However, the structure of the control instruction receiving unit 490 is not limited if the control instruction is received from the screen monitor Ma.

The management kernel 14b reads out the control object 127 from the disk 31 and supplies it to the object reception section 41 over the network 14a. The object reception section 41 has the supplied control object 127 executed in the object execution environment 42. These operations are the same as those in the embodiment of FIG. 21.

If the control object 127 is executed in the object execution environment 42, the control instruction receiving section 362 receives the control instruction information from the control instruction transmission section 361 and outputs it to the control management section 363. The control management section 363 then edits a control signal from the input control instruction information and outputs it to the control signal transmission section 364.

The control signal transmission section 364 transmits the control signal to the system 20 and controls it. In the above description, the control object comprises the control instruction receiving section 362, control management section 363, and control signal transmission section 364. However, the construction of the control object is not limited if the control instruction information is input and the control signal is output.

According to said form of the invention, when a control function is to be newly added to the computer 154, it should suffice if the control object 127 is added to the disk 31 of object storage section 12. There is no need to provide the computer 154 with a memory for storing the software for the control function and to install the software in the memory. Therefore, the technique of said form of the invention is very advantageous.

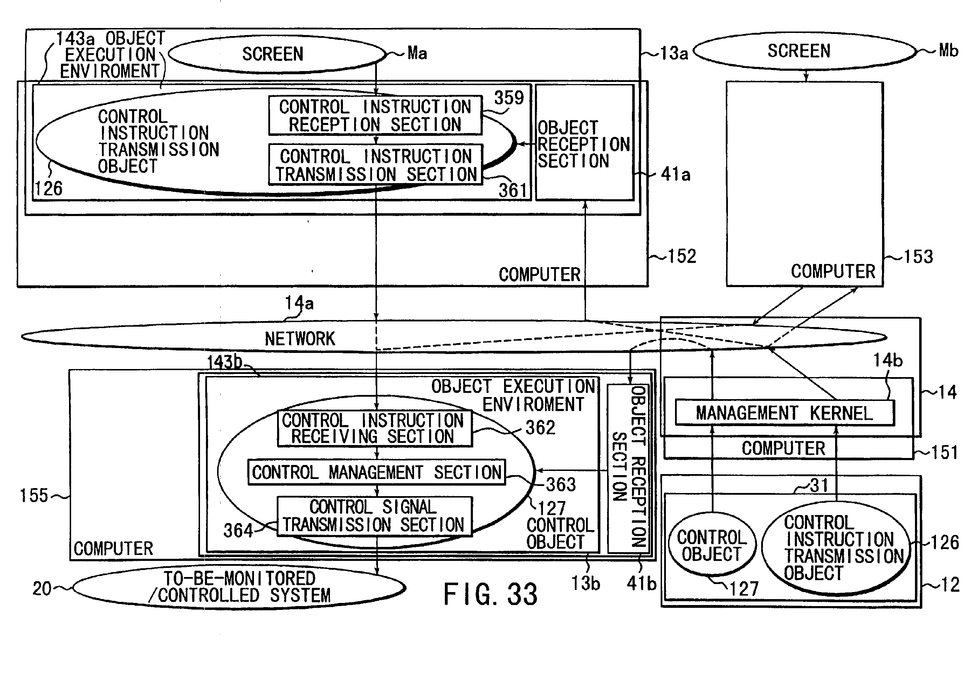

FIG. 33 shows the structure of a further form of the invention. This form is substantially the same as the preceding ones, except that the information input section 11 is not provided and the display process section 358 is not provided in the object execution environment 42. Thus, an overlapping description is omitted.

In FIG. 33, the computer 155 comprises the object execution environment 143b and object reception section 41b. The computer 152 comprises the object execution environment 143a and object reception section 41b. The computer 151 comprises the management kernel 14b, and the disk 31 stores the control instruction reception object 126 and control object 127.

The object reception section 41a, object execution environment 143a and screen monitor Ma constitute a first object execution section 13a. The object execution environment 143b and object reception section 41b constitute a second object execution section 13b.

The management kernel 14b reads out the control instruction reception object 126 from the disk 31 and supplies it to the object reception section 41a over the network 14a. The object reception section 41a has the supplied control instruction reception object 126 executed in the object execution environment 42a. These operations are the same as those in the embodiment of FIG. 21.

If the control instruction reception object 126 is executed by the object execution environment 42a, the control instruction reception section 359 receives a control instruction input through the screen monitor Ma and outputs control instruction information to the control instruction transmission section 361. The control instruction transmission section 361 transmits the input control instruction information.

The above description has been directed to the case where the control instruction reception object 126 comprises the control instruction reception section 359 and control instruction transmission section 361. However, the object 126 may be in any mode if the control instruction is received from the screen monitor Ma.

The management kernel 14b reads out the control object 127 from the disk 31 and supplies it to the object reception section 41b over the network 14a. The object reception section 41b has the supplied control object 127 executed in the object execution environment 42b. These operations are the same as those in the embodiment of FIG. 21.

If the control object 127 is executed by the object execution environment 42b, the control instruction receiving section 362 receives the control instruction information from the control instruction transmission section 361 and outputs it to the control management section 363. The control management section 363 forms a control signal from the input control instruction information and outputs it to the control signal transmission section 364. The transmission section 364 transmits the control signal to the system 20 and controls the same.

The above description is directed to the case where the control object 127 comprises the control instruction receiving section 362, control management section 363, and control signal transmission section 364. However, the construction of the control object 127 is not limited if the control instruction information is input and the control signal is output to the system to control the same.

In the above description, the control instruction is received from the screen monitor Ma. However, the control instruction may be received from the screen monitor Mb by the same operations.

According to said exemplary form shown in FIG. 33, when a control reception function and a control function are to be newly added to the computers 152, 153 and 154, it should suffice if the control instruction reception object 126 and control object 127 are added to the disk 31 of object storage section 12. Thus, the computers 152 and 153 can receive the control instruction. Therefore, the technique of said exemplary form is very advantageous.

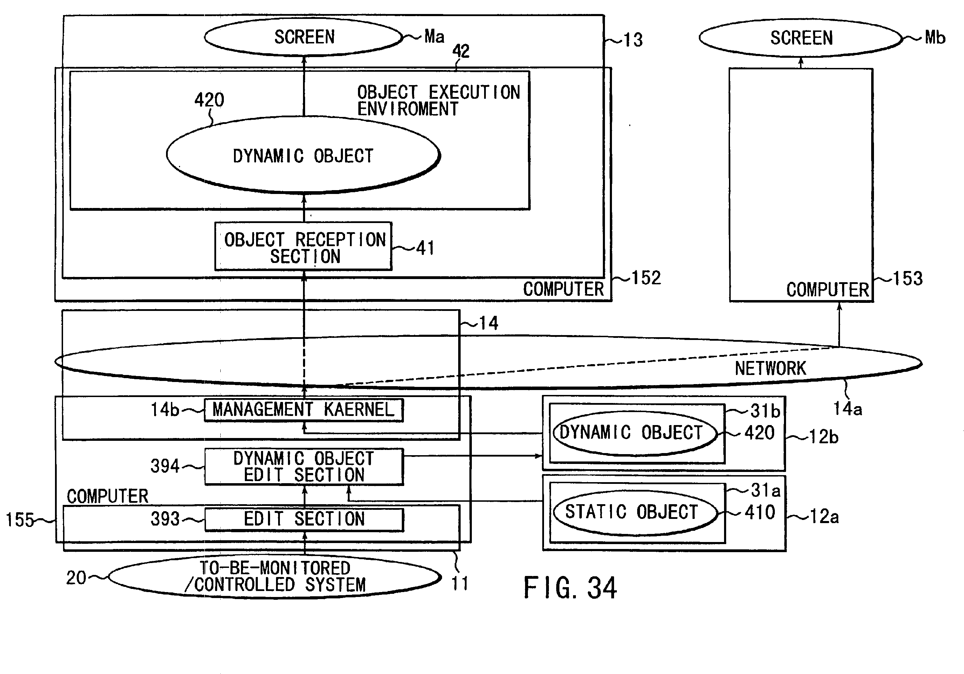

FIG. 34 shows the structure of a further form of the invention. The parts common to those of the preceding embodiments are denoted by like reference numerals, and a description thereof is omitted. In FIG. 34, a computer 155 comprises an edit section 393, a dynamic object edit section 394 and a management kernel 14b. A computer 153 comprises an object reception section 41 and an object execution environment 42. The disk 31a stores a static object 410. The edit section 393 constitutes an input section 11. The management kernel 14b and network 14a constitute an object management section 14.

The disk 31a stores the static object 410, and the disk 31a and a driver constitute a static object storage section 12a. A disk 31b stores a dynamic object 420, and the disk 31b and a driver constitute a dynamic object storage section 12b. The object reception section 41, object execution environment 42 and screen monitor Ma constitute an object execution section 13.

Information about the state of the system 20 is input to the edit section 393. The edit section 393 edits the input information to form edit information, and outputs the edit information to the dynamic object edit section 394. The dynamic object edit section 394 receives the edit information about the state of the system 20 from edit section 393 and reads out the static object 410 from the disk 31a. With reference to the edit information, the dynamic object edit section 394 forms the dynamic object 420 from the static object 410 and stores the dynamic object 420 in the disk 31b.

The static object 410 is an object comprising either or both of the data and program necessary for displaying the state of the system 20 on the monitor Ma, Mb in the form of a screen. The static object 410 includes, for example, information about the location on the screen, the kind of characters, symbols, diagrams or tables, the color thereof, the size thereof, and the mode of normal display/flickering display. Specifically, the static object 410 comprises information non-associated with the state of the system 20. For example, the static object 410 comprises either or both of a program and data for "displaying a message at a center" of the screen.

With reference to the edit information, the dynamic object edit section 394 forms from the static object the dynamic object for displaying the screen image corresponding to the state of the system 20. If the edit information about the state of the system 20 indicates abnormality, the dynamic object comprises either or both of a program and data for "displaying a message of 'malfunction occurred' in red at a center."

If the edit information about the state of the system 20 indicates normality, the dynamic object comprises either or both of a program and data for "displaying a message of 'no malfunction' in green at a center." The dynamic object edit section 394 stores the formed dynamic object 420 in the disk 31b.

The dynamic object edit section 394 may form the dynamic object 420 periodically or each time the information about the state of the system 20 has changed. The timing of formation of the dynamic object 420 is not limited.

In the above description, the dynamic object has been described by referring to a simple case of displaying a message. Needless to say, dynamic objects for displaying various screen images may be created in accordance with the information about the state of the system 20.

The management kernel 14b reads out the dynamic object 420 from the disk 31b and supplies it to the object reception section 41 over the network 14a. The object reception section 41 has the supplied dynamic object 420 executed in the object execution environment 42. These operations are the same as those in the preceding embodiments.

If the dynamic object 420 is executed in the object execution environment 42, the screen image is displayed on the screen monitor Ma. In the case of the above-described dynamic object 420, if the system 20 is in the abnormal state, "malfunction occurred" is displayed in red at the center of the screen. If the system 20 is in the normal state, "no malfunction" is displayed in green at the center of the screen.

In this manner, the dynamic object 420 effects the display of the screen image corresponding to the state of the system 20. Although in the above description the screen image is displayed on the screen monitor Ma, a screen image corresponding to the state of the system is also displayed on the screen monitor Mb.

In the description, the screen images are displayed on the screen monitors Ma and Mb. Needless to say, information for displaying the state of the system 20 in the form of an image, a mosaic display plate, voice or alarm or a combination thereof may be output from the computer 152, 153 according to the same operations.

As has been described above, according to said exemplary, form shown in FIG. 34, when information for displaying the state of the system 20 in the form of a screen image, an image, a mosaic display plate, voice or alarm or a combination thereof is to be newly output from the computer 152, 153, it should suffice to add the dynamic object edit section 394 to the computer 155 and to add the static object 410 to the disk 31a. There is no need to provide the computer 152, 153 with a memory for storing the software and to install it in the memory. Therefore, the technique of said exemplary, form is very advantageous.

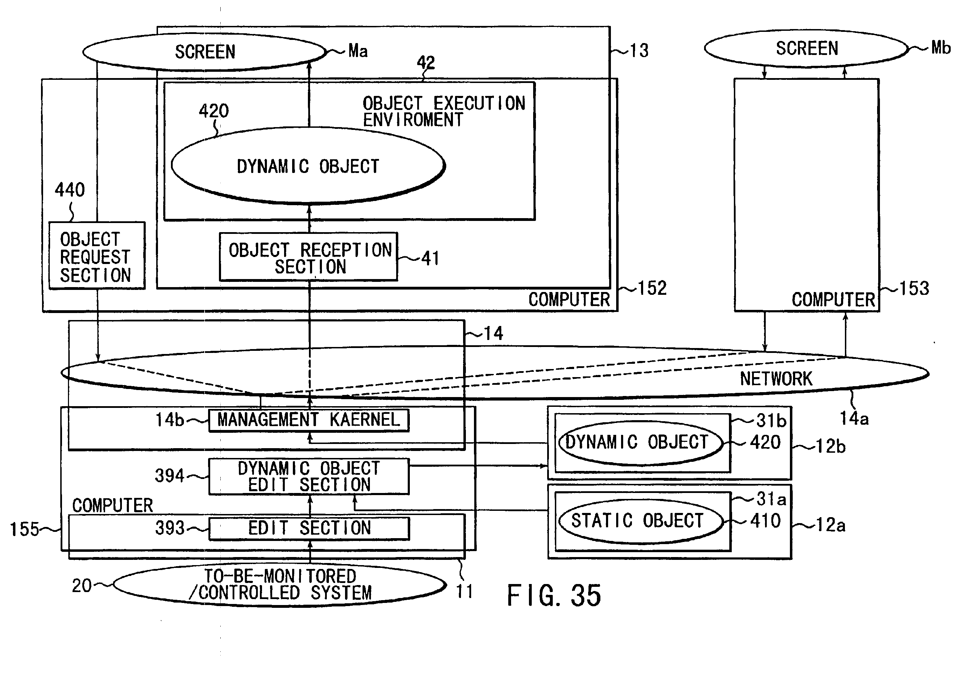

FIG. 35 shows the structure of a further form of the invention. The structure of said exemplary, form is substantially the same as a further form of the invention (FIG. 34) except that an object request section 440 is added to the computer 152.

Information about the state of the system 20 is input to the edit section 393. The edit section 393 edits the input information to form edit information, and outputs the edit information to the dynamic object edit section 394. The dynamic object edit section 394 receives the edit information about the state of the system 20 and reads out the static object 410 from the disk 31a. With reference to the edit information, the dynamic object edit section 394 forms the dynamic object 420 from the static object 410 and stores the dynamic object 420 in the disk 31b, as in said exemplary, form (FIG. 34).

When the object request section 440 has received a screen request from the screen monitor Ma, the object request section 440 sends screen request information to the management kernel 14b over the network 14a. Upon receiving the screen request information, the management kernel 14b reads out the dynamic object 420 from the disk 31b and supplies it to the object reception section 41 over the network 14a.

The object reception section 41 has the supplied dynamic object 420 executed in the object execution environment 42, as in the operations shown in FIG. 20. If the dynamic object 420 is executed in the object execution environment 42, the screen image corresponding to the state of the system 20 is displayed on the screen monitor Ma.

In the above description, when the display request has been issued from the screen monitor Ma, the screen image is displayed on the screen monitor Ma. When the display request has been issued from the screen monitor Mb, the screen image corresponding to the state of the system 20 is similarly displayed on the screen monitor Mb.

In the description, the screen images are displayed on the screen monitors Ma and Mb. Needless to say, information for displaying the state of the system 20 in the form of an image, a mosaic display plate, voice or alarm or a combination thereof may be output from the computer 152, 153 according to the same operations.

As has been described above, according to Embodiment 15 shown in FIG. 35, when information for displaying the state of the system 20 in the form of a screen image, an image, a mosaic display plate, voice or alarm or a combination thereof is to be newly output from the computer 152, 153 upon request, it should suffice to add the dynamic object edit section 394 to the computer 155 and to add the static object 410 to the disk 31a. There is no need to provide the computer 152, 153 with a memory for storing the software and to install it in the memory. Therefore, the technique of Said exemplary form is very advantageous.

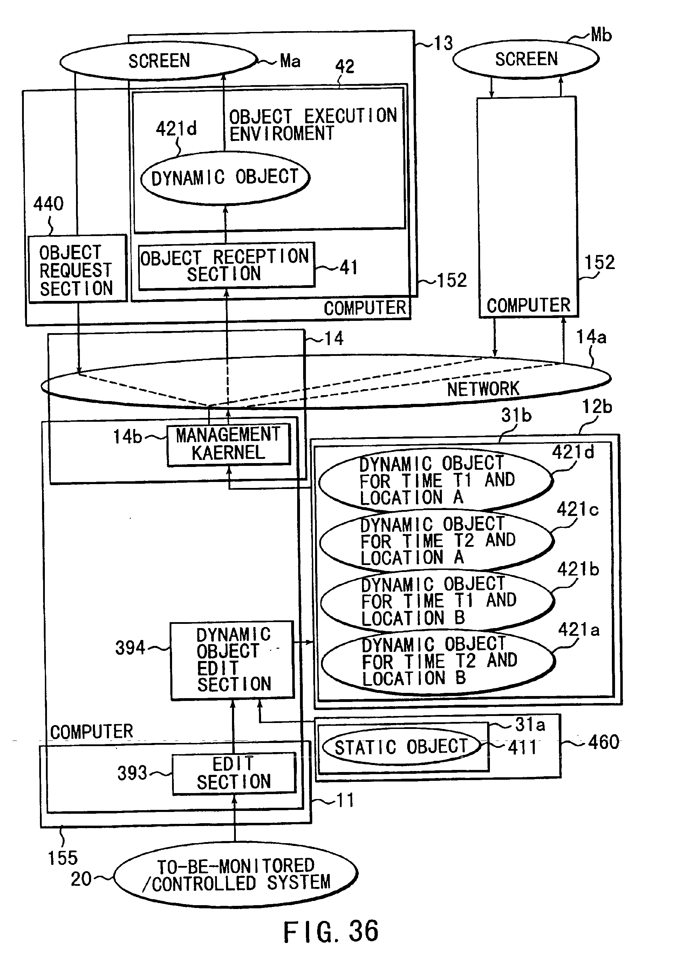

FIG. 36 shows the structure of a further exemplary : form of the invention. The structure of said exemplary : form is the same as that of said exemplary form (FIG. 35) except that a portion of the dynamic object formed by the dynamic object edit section 394, which meets a condition based on one or more of a time, a specific portion of the to-be-monitored system and a specific location of the system, is output.

Information about the state of the system 20 is input to the edit section 393. The edit section 393 edits the input information to form edit information, and outputs the edit information to the dynamic object edit section 394. The dynamic object edit section 394 receives the edit information about the state of the system 20 and reads out a static object 411 from the disk 31a. With reference to the edit information, the dynamic object edit section 394 forms dynamic objects 421a, 421b, 421c and 421d from the static object 411 and stores the dynamic objects in the disk 31b.

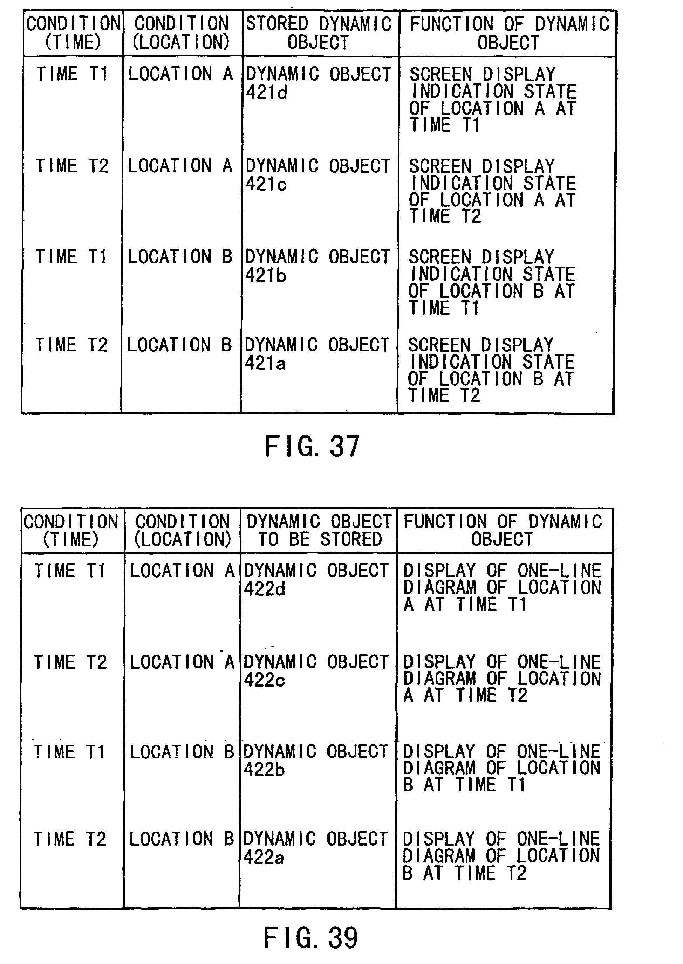

In this case, the dynamic object edit 394 stores dynamic objects in the disk 31b at specific times and with respect to specific locations in the system 20. In the case of the embodiment shown in FIG. 35, dynamic objects are formed and stored, as shown in FIG. 37, according to the conditions of time and location.

Upon receiving a screen request with the condition of time and location from the screen monitor Ma, the object request section 440 transmits the screen request information with the condition to the management kernel 14b. Upon receiving the screen request information with the condition, the management kernel 14b reads out one of the dynamic objects 421a, 421b, 421c and 421d corresponding to the associated time and location from the disk 31b, and delivers the dynamic object to the object reception section 41 over the network 14a.

The object reception section 41 has the delivered dynamic object 421a, 421b, 421c, 421d in the object execution environment 42, as in the operations shown in FIG. 21. If the dynamic object 421a, 421b, 421c, 421d is executed in the object execution environment 42, the screen monitor Ma is enabled to display the screen image corresponding to the state of the system 20.

The above description is directed to the case where the dynamic object edit section 394 forms the dynamic objects in accordance with the conditions of the time and location. However, needless to say, dynamic objects may be formed and stored in accordance with conditions based on one or more of a time, a specific portion of the to-be-monitored system 20 and a specific location of the system, without departing from the spirit of the invention.

The method of formation of dynamic objects is not limited. For example, instead of storing the dynamic objects in accordance with conditions, the dynamic object edit section 394 may form only one dynamic object so that when the dynamic object has been executed in the object execution environment 42, a portion of the dynamic object, which meets the condition, may be output.

In the above description, when the display request has been issued from the screen monitor Ma, the screen image is displayed on the screen monitor Ma. When the display request has been issued from the screen monitor Mb, the screen image corresponding to the state of the system 20 is similarly displayed on the screen monitor Mb.

In the description, the screen images are displayed on the screen monitors Ma and Mb. Needless to say, information for displaying the state of the system 20 in the form of an image, a mosaic display plate, voice or alarm or a combination thereof may be output from the computer 152, 153 according to the same operations.

As has been described above, according to said exemplary form shown in FIG. 36, when the computer 152, 153 is constructed to output, upon request, information meeting the condition based on one or more of a time, a specific portion of the to-be-monitored system 20 and a specific location of the system 20 in accordance with the state of the system 20, in the form of a screen image, an image, a mosaic display plate, voice or alarm or a combination thereof, it should suffice to add the dynamic object edit section 394 to the computer 155 and to add the static object 411 to the disk 31a. There is no need to provide the computer 152, 153 with a memory for storing the software and to install it in the memory. Therefore, the technique of said exemplary form is very advantageous.

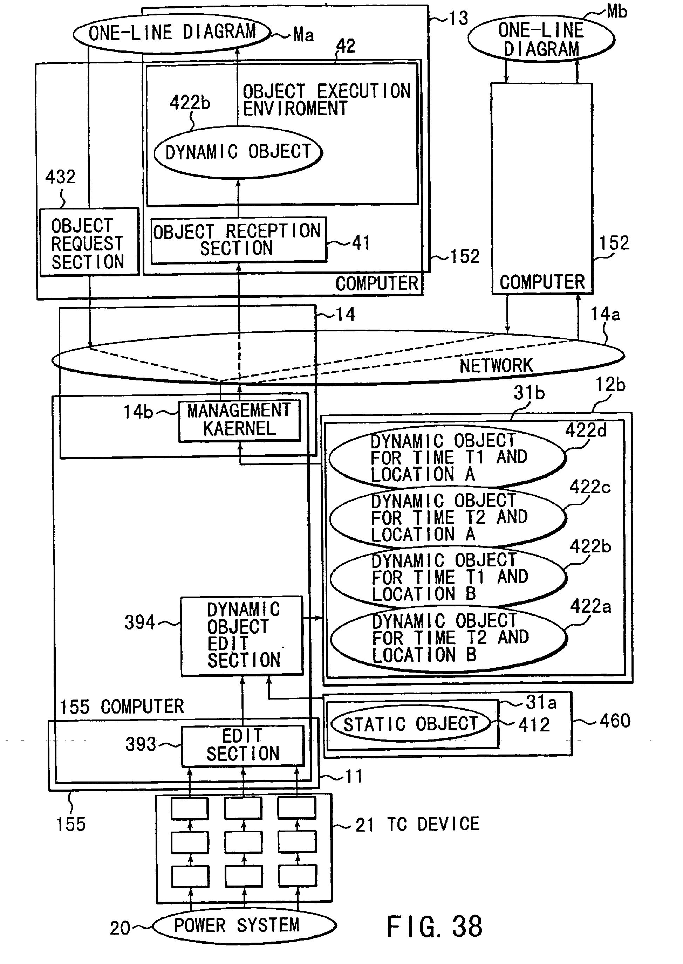

FIG. 38 shows the structure of a further form of the invention. The structure of said exemplary, form is the same as that of said exemplary, form (FIG. 36) except that the to-be-monitored and controlled system is the power system 20 and the information about the state of the power system 20 is supplied to the input section via a telecontrol device TC 21.

Information about the state of the power system 20 is input to the edit section 393 via the TC 21. The edit section 393 edits the input information to form edit information, and outputs the edit information to the dynamic object edit section 394.

The dynamic object edit section 394 receives the edit information about the state of the power system 20 from the edit section 393 and reads out a static object 412 from the disk 31a. With reference to the edit information, the dynamic object edit section 394 forms dynamic objects 422a, 422b, 422c and 422d from the static object 412 and stores the dynamic objects in the disk 31b.

In this case, the dynamic object edit 394 stores dynamic objects in the disk 31b at specific times or with respect to specific locations in the system 20. In the case of the embodiment shown in FIG. 36, dynamic objects are formed and stored, as shown in FIG. 39, according to the conditions of time and location.

Upon receiving a screen request with the condition of time and location from the screen monitor Ma, the object request section 440 transmits the screen request information with the condition to the management kernel 14b. Upon receiving the screen request information with the condition, the management kernel 14b reads out one of the dynamic objects 422a, 422b, 422c and 422d corresponding to the associated time and location from the disk 31b, and delivers the dynamic object to the object reception section 41 over the network 14a. The object reception section 41 has the delivered dynamic object 422a, 422b, 422c, 422d in the object execution environment 42, as in the operations shown in FIG. 21.

If the dynamic object 422a, 422b, 422c, 422d is executed in the object execution environment 42, the screen monitor Ma is enabled to display a one-line diagram screen image corresponding to the state of the power system 20.

In this context, the one-line diagram refers to a diagram showing the on/off state of switches of the power system and status information on the protection relay devices by shapes and colors of symbols and letters, as well as a diagram showing the active and reactive power flow of transmission lines and transformers or the voltage of the bus. The power system is expressed in the form of a one-line diagram.

The above description is directed to the case where the dynamic object edit section 394 forms the dynamic objects in accordance with the conditions of the time and location. However, needless to say, dynamic objects may be formed and stored in accordance with conditions based on one or more of a power plant, an area, a voltage level and a time, without departing from the spirit of the invention.

The method of formation of dynamic objects is not limited. For example, instead of storing the dynamic objects in accordance with conditions, the dynamic object edit section 394 may form only one dynamic object so that when the dynamic object has been executed in the object execution environment 42, a portion of the dynamic object, which meets the condition, may be output.

In the above description, when the display request has been issued from the screen monitor Ma, the on-line diagram screen image is displayed on the screen monitor Ma. When the display request has been issued from the screen monitor Mb, the one-line diagram screen image corresponding to the state of the power system 20 is similarly displayed on the screen monitor Mb.

In the description, the screen images are displayed on the screen monitors Ma and Mb. Needless to say, information for displaying the state of the system 20 in the form of a one-line diagram, voice or alarm or a combination thereof may be output from the computer 152, 153 according to the same operations.

According to said exemplary form shown in FIG. 38, when the computer 152, 153 is constructed to output, upon request, information meeting the condition based on one or more of a power plant, an area, a voltage level and a time in accordance with the state of the power system 20, in the form of a one-line diagram, voice or alarm or a combination thereof, it should suffice to add the dynamic object edit section 394 to the computer 155 and to add the static object 412 to the disk 31a. There is no need to provide the computer 152, 153 with a memory for storing the software and to install it in the memory. Therefore, the technique of said exemplary form is very advantageous.

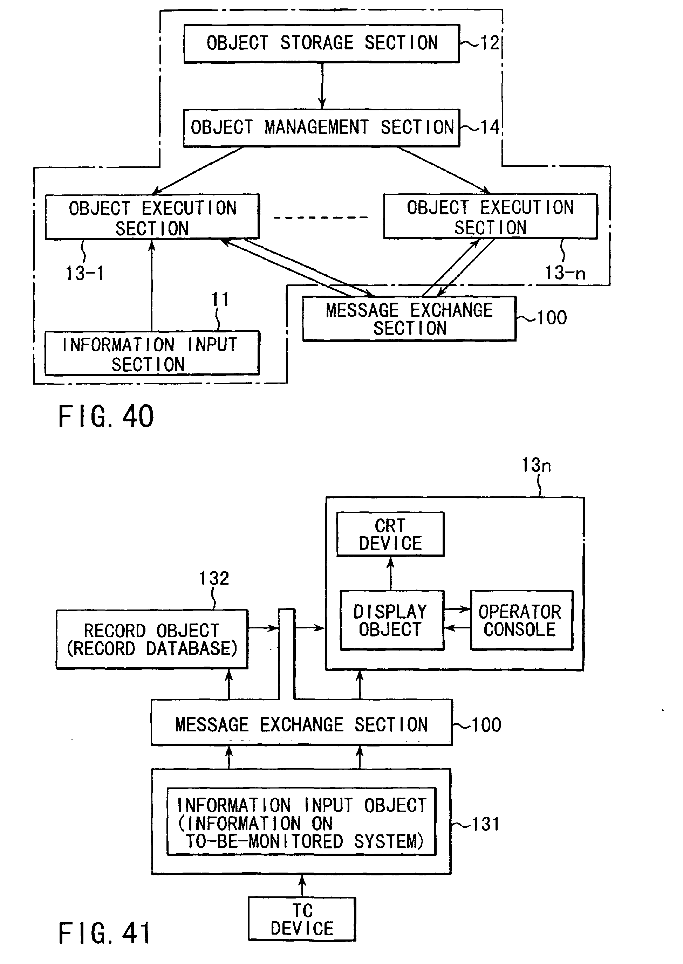

FIG. 40 is a block diagram showing an exemplary form of the power system monitor control system. In this form, messages are transmitted among object execution sections to call object functions from one another.

In FIG. 40, the parts common to those in FIG. 3 are denoted by like reference numerals and a description thereof is omitted. In this form, a message exchange section 100 is newly added. The message exchange section 100 is a section for transmitting messages among a plurality of object execution sections arranged in a distributed manner over a network to call object functions from one another, and receiving messages having results of called functions. Thus, a distributed process is realized among the object execution sections.

FIG. 41 is a conceptual view of the message exchange, wherein messages are transmitted among the object execution sections 13-1 to 13-n via the message exchange section 100. According to this exemplary form, the messages can be exchanged among the object execution sections 13-1 to 13-n and their functions can be called over the network. For example the information input section, record object and display object can be executed in the different object execution sections connected over the network. In FIG. 41, the information input section is executed as an object.

The term "message exchange section" generally refers to a network such as LAN or WAN and communication procedures for exchanging desired messages over the network. For example, the message exchange section comprises a network of TCP/IP and remote procedure call (RPC) on the TCP/IP. According to this exemplary form, the degree of freedom for selecting the object execution section is increased.

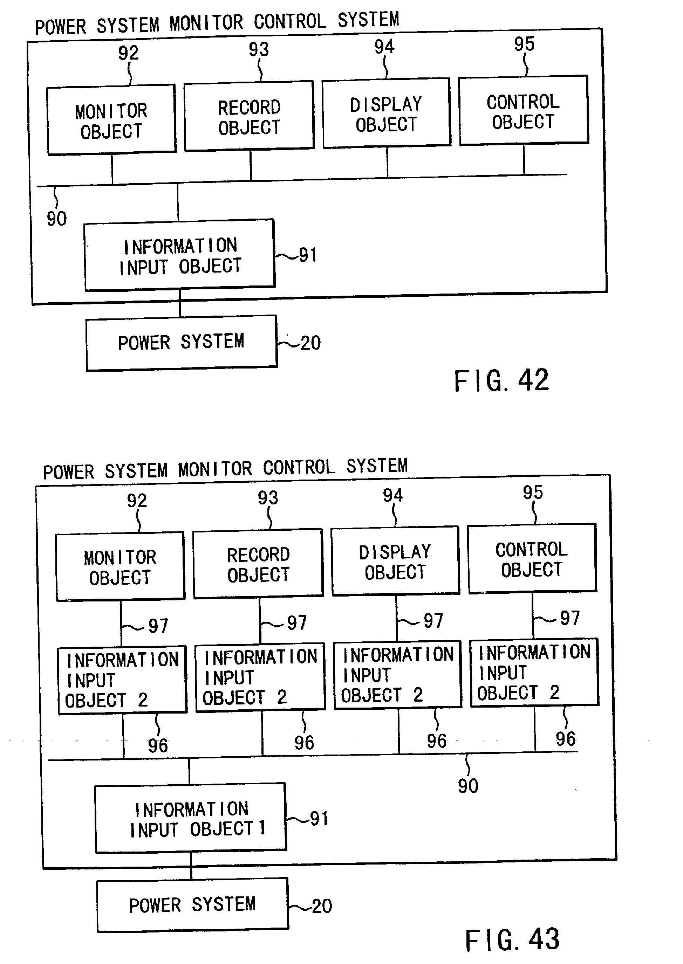

FIG. 42 is a conceptual view for explaining that the process performance of the entirety of the power system monitor control system deteriorates due to a low transmission speed between each object execution section and a network. The deterioration results from the fact that a network 90 for connecting an information input object 91 and each object execution section for a display object 94, a record object 93, etc. becomes a bottleneck.

FIG. 43 shows the structure of an exemplary form of the power system monitor control system, wherein the information transmission between the information input section and their associated objects can be performed at high speed. As is shown in FIG. 43, a bottleneck due to a low-speed network can be avoided in the case where information input objects are arranged in a distributed fashion and each object refers to information input to the information input section.

In FIG. 43, a low-speed network 90 is provided between an information input object 1 (91) and information input objects 2 (96), and a high-speed network 97 is provided between the information input objects 2 (96), on the one hand, and a monitor object (92), a record object (93), a display object (94) and a control object (95), on the other.

In the above structure, the information input object 1 (91) immediately outputs gathered information to all information input objects 2 (96) without retaining it. The information input objects 2 (96) which have received the information operate in the same manner as the information input object shown in FIG. 2.

Accordingly, even if the transmission speed of the network 90 between the information input objects 2 (96), which have received information, and the information input object 1 (91) is low, the information is passed through the low-speed network only once. The information, once input to the information input objects 2 (96), is transmitted at any time through the high-speed network 97 between the information input objects 2 (96) and each object execution object, 92-95. Therefore, the efficiency of information exchange is not degraded.

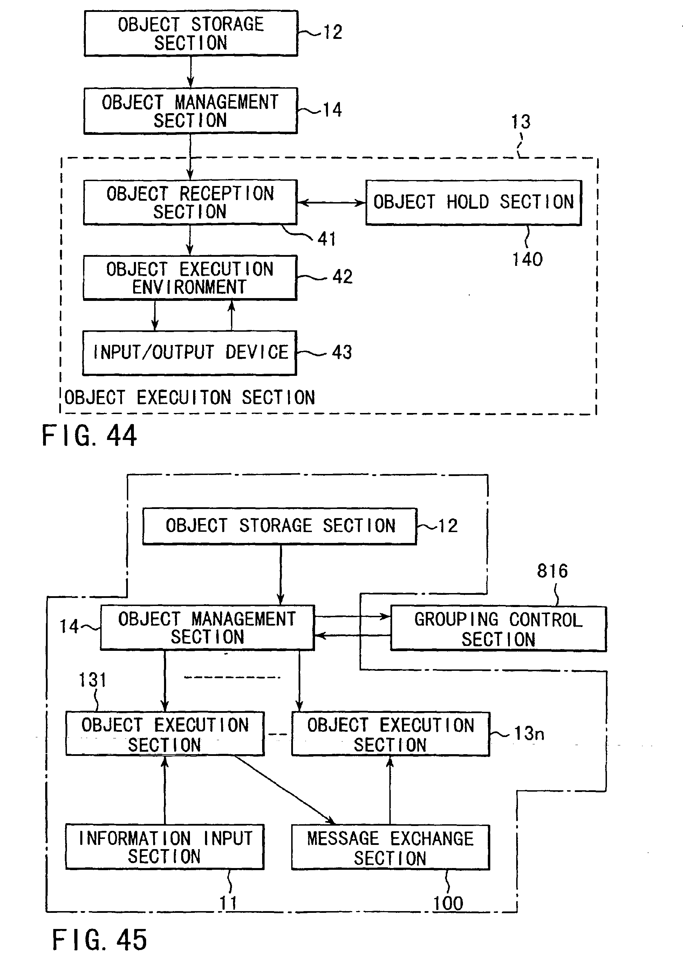

FIG. 44 shows the structure of an embodiment of the monitor control system. In this embodiment, even if the number of times of calls of objects is increased, the overhead for distributing the objects does not increase. For this purpose, the object distributed from the object storage section is held in an object hold section 140 for a predetermined time period.

The object execution section 13 comprises the following, as shown in FIG. 44:
(1) object reception section 41,
(2) object execution environment 42,
(3) input/output device 43, and
(4) object hold section 140.

The elements (1) to (3) are the same as in the object execution section described with reference to FIG. 6, and these elements operate as illustrated in FIGS. 10 and 20.

The element (4) operates as follows.
* The object hold section (4) holds the object received by the object reception section 41 for a predetermined time period. Hereinafter, the object as stored is referred to as "cached object." Where there are two or more stored objects, these are generally called "cached object group."
* If the object management section 14 has instructed the execution of an object, the object hold section (4) determines whether the object is included in the cached object group. If the object is included, the object hold section (4) takes out the object from the cached object group and starts the execution of the object.
* If the object to be executed is not included in the cached object group, it is distributed from the object storage section 12 according to an ordinary procedure and is executed. This object is held in the object hold section 140 for a predetermined time period.

According to the above operations, the method of instructing execution of the object between the object management section and the object execution section is changed to the following method comprising two steps:

### Step 1:

The kind of the object is designated and then the execution of the object is instructed. If this object is held in the object execution section, the execution of the held object is started, and the following step 2 is omitted. If the object is not held in the object execution section, the following step 2 is executed.

### Step 2:

The object management section takes out the object to be executed from the object storage section and distributes it to the associated object execution section. Then, the execution of the distributed object is instructed.

The time period for which the object is to be held in the object hold section is freely chosen. For example, if the object hold section has an excess capacity for holding the object, the object may be held as long as the capacity permits. Alternatively, each time the object execution section is initialized, the held object may be discarded. According to this embodiment, even if the frequency of distribution of dynamic functions increases, an increase in overhead for distribution of objects is prevented.

FIG. 45 shows the structure of another exemplary form of the monitor control system. In this exemplary form, plural objects or object execution sections are arranged according to predetermined groups or grouped according to external conditions such as programs.

For this purpose, a control section is provided for grouping plural objects or object execution sections when the plural objects or object execution sections cooperate to perform a monitor control over the network.

In FIG. 45, the information input section 11, object storage section 12, object execution section 13, object management section 14 and message exchange section 100 are the same as were described in the preceding embodiments.

A grouping control section 816 is newly provided in this exemplary form. The grouping control section 816 groups objects or object execution sections into one or more object or object execution section groups. Although the grouping control section 816 can be realized by an object or an object execution section, it can also be constructed by a concept of the computer system as shown in, e.g. FIG. 6.

Accordingly, the grouping control section groups objects or object execution sections discretely arranged over the network into one or more object or object execution section groups. The to-be-monitored systems are monitored and controlled in units of a group, and distributed processing can be achieved among object or object execution section groups.

Normal operations will now be described. The information input section 11, object storage section 12, object execution section 13 and object management section 14 operate, as in Embodiment 1. The message exchange section 100 operates, as in embodiment shown in FIG. 40.

The grouping control section 816 determines the groups of the objects or object execution sections for monitoring and controlling the range of to-be-monitored and controlled systems, on the basis of the information from the object management section 14, object execution section 13, information input section 11, etc., with use of the message exchange section 100.

The result of determination is reported to the object management section or object execution section via the message exchange section 100. FIG. 45 does not show the flow of data between the grouping control section and other sections, or message exchange sections for the flow of data.

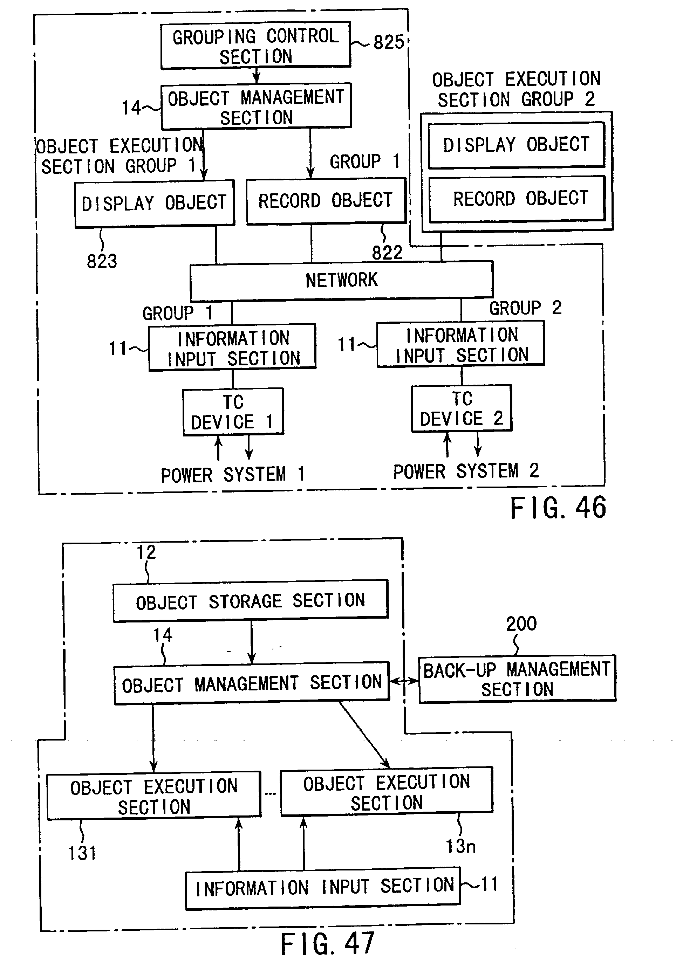

FIG. 46 shows a specified structure of the system of FIG. 45. In this exemplary form, the information input section is also executed as an object. The display object and record object has been described above. Although the object management section 14 operates in the same manner as in FIG. 3, the objects, which can be executed, are limited by the grouping control section 825.

In FIG. 46, physically separated object execution sections, i.e. display object and record object, constitute an object execution section group 1 for performing a monitor control relating to the TC device 1. A record object and a display object in the same object execution section constitute an object execution section group 2.

According to this exemplary form, plural objects or object execution sections can be grouped. For example, a specified information input section, record object, display object, etc. (which can be executed in different object execution sections connected over the network) can cooperate to monitor and control a specified system.

The object execution sections may be discrete or associated in a specific group, as will be described below.

The entirety of the to-be-monitored system is monitored and controlled by one or more object execution section groups. Alternatively, the to-be-monitored system is divided into some portions and monitored and controlled by one or more object execution section groups. Alternatively, there is provided a mechanism for grouping or separating objects. Specifically, the object grouping control section is enabled to be set under the following conditions.
1) Static grouping/separating: based on the same technical idea as in the conventional system, to-be-monitored/controlled systems are fixed, and objects/object execution sections for monitoring and controlling are fixed.
2) Dynamic grouping/separating: as has been described in other embodiments, the object/object execution section groups are dynamically set on the basis of a load or a fault of the object execution section, or the state of the process to be monitored.
3) Prohibition of grouping: in connection with the separation of the dynamic grouping, a certain object/object execution section is prohibited from being grouped, in order to prevent the certain object or object group from adversely affecting another group (e.g. over-assignment or fault of objects.).

According to this exemplary form, the objects can be arranged in predetermined groups or grouped according to external conditions such as processes. Therefore, there is no need to adopt a conventional fixed system structure or to monitor/control fixed processes.
The object execution sections can be efficiently used.

FIG. 47 shows the structure of an exemplary form of the monitor control system.

In this exemplary form, one object is executed by a plurality of object execution sections. A back-up management section 200 is newly added in this exemplary form. The other parts are the same as shown in FIG. 2.

The back-up management section 200 instructs plural object execution sections, which are arranged discretely over the network, to execute the same object, receives execution results, and determines a final result in the system. Since the same object is executed by two or more object execution sections, the following can be achieved.
(1) Results of plural object execution sections are received, and the results can be used after confirming the identity of the results.
(2) After the object is executed by plural object execution sections, an earliest received result can be used.
(3) After the object is executed by plural object execution sections, a normally calculated result can be used.
(4) The object management section 14 sends an object to one object execution section. And then, the object management section 14 determines whether or not the one object execution section is malfunctioned based on the instruction from the back-up management section 200. Resulting in that, if the object management section 14 determines the one object execution section is malfunctioned, the object management section 14 send the object which is sent to the one object execution section to an another object execution section. Therefore, in this case, the back-up function can be obtained.

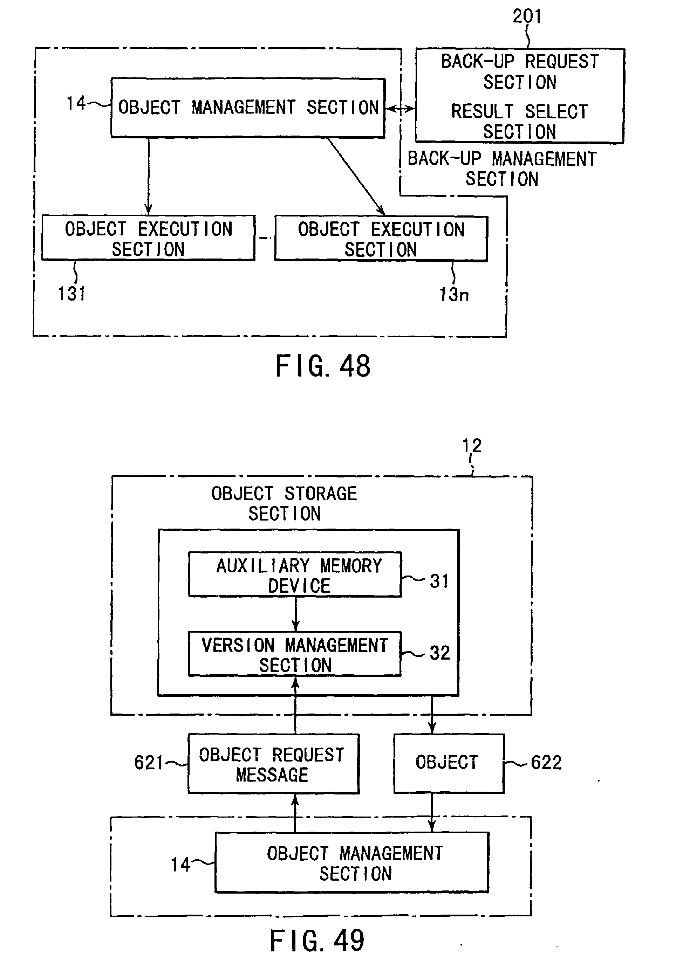

FIG. 48 is a conceptual view of the operation of the system. A back-up request section 201 request the object management section 14 to effect double execution of an object containing both a program and data. The object management section 14 transmits the same object from the object request section to the object execution section (1) 13-1 and object execution section (2) 13-2.

According to this exemplary form, the same object can be executed by the two or more object execution sections. Thus, the above operations (1) to (3) can be achieved, and a back-up system can be easily constructed without preparing special software for back-up process. Therefore, the reliability of the system can be enhanced.

FIG. 49 shows the structure of another exemplary form of the monitor control system. In this embodiment, an operation after alteration of a program or data can be confirmed. In a power system monitor control system, alteration of a program or data is frequently made.

In the conventional power system monitor control system, when an operation confirmation test is performed after a program or data is altered, one or more computers are separated from an operating computer in order to prevent influence on the operating system.

For example, in the typical conventional distributed-type power system monitor control system shown in FIG. 1, in order to test an altered program in the monitoring computer B 71, the computer 72 needs to be separated from the other operating computers.

In addition, in order to test the computer 72, other computers (e.g. recording computer C 73), too, need to be separated from the operating system.

However, in the conventional power system monitor control system, the operation confirmation tests of altered programs or data are carried out by separating part of the computers from the operating system, the functions of the separated computer cannot be executed.

In a system wherein one function is performed by plural computers to enhance reliability, the function of the operating system is not damaged even if one or more computers are separated for program confirmation tests. However, in case the operating computer is halted due to some fault during the operation confirmation test, the function which is being confirmed cannot be achieved due to a fault, e.g. disability of back-up.

In the present exemplary, form of the invention, the object storage section 12 comprises a version management section 32 and an auxiliary memory device 31 in order to perform an operation test of part or entirety of the power system monitor control system.

The version management section 32 manages plural objects of different versions. In addition, if the version management section 32 receives an object request message 621 from the object management section 14, the section 32 selects an object 622 of a required version from the auxiliary memory device 31 and outputs it to the object management section 14.

The object storage section stores various programs, data, or various objects containing the programs and data for monitoring and controlling the power system. In this case, the object storage section can store plural objects which are the same object of different versions. The stored objects are supplied to the object execution section via the object management section.

The operations of the present system will now be described. The object management section 14 sends the object request message 621 to the object storage section 12. The object request message 621 contains the object name and the object version. The version management section 32 of object storage section 12 decodes the object request message 621, reads out the associated object 622 from the auxiliary memory device 31, and sends it to the object management section 14.

The version management section 32 reads out the associated object on the basis of the object name and object version by any one of the following methods:
(1) Reading out an object with which the object name and object version agree;
(2) Reading out an object with which the object name agrees and to which the object version is closest; or
(3) Reading out an object irrespective of the object version if only one object has the same object name.

The version management section 32 has a function of reading out the associated object from plural objects.

According to the present exemplary form of the invention, the following advantages can be attained since the object storage section stores plural objects of different versions:
(1) The objects of the same function and different versions are read out, whereby the operation confirmation test can be performed in connection with the alteration of the program or data;
(2) The operation confirmation test can be performed without halting the operating computer; and
(3) The operation confirmation test can be performed without adversely affecting the operating computer.

It is to be noted that a CRT device may be a VDU (Video Display Unit).

The present exemplary form of the invention includes a medium storing programs for achieving the functions of the power system monitor control system comprising the information input section for inputting the information about the state of the to-be-monitored system, which varies with the passing of time; the object storage section for storing software comprising a program, data or both program and data, which achieve part or all of the functions of displaying, monitoring, recording, controlling and operating-supporting the state of the system, on the basis of information about the state of the system input from the information input section; the object management section for distributing the objects stored in the object storage section; and at least one object execution section for executing part or all the functions of the displaying, monitoring, recording, and operating-supporting the state of the system, by executing the object distributed from the object management section.

According to this medium, the programs recorded in the medium are read out into the computers and the programs are executed, whereby the power system monitor control system having the above advantages can be realized.

As has been described above, the present invention can provide a monitor control system wherein objects containing programs and data are distributed and the distributed objects are executed, whereby the functions are easily extended.

## Claims

1. A monitor control system comprising:
a first computer, connected to a network, including information gather means (11) for gathering information about a state of a to-be-monitored and controlled system;
a second computer, connected to the network, including object storage means (12) for storing one or more objects for monitoring and controlling the to-be-monitored and controlled system and object management means (14) for supplying an object stored in the object storage means; and
a third computer, connected to the network, including object execution means (13) for executing the object supplied from the object management means via the network, on the basis of the information gathered by the information gather means and received via the network said object adapted to issue a call request to another object stored in the storage means; wherein
the object management means is adapted to supply the object stored in the object storage means to the object execution means via the network, when the said object issues said call request to said other object in the object storage means.

2. The monitor control system according to claim 1, wherein said object comprises at least one of a program and data for monitoring and controlling said to-be-monitored and controlled system.

3. The monitor control system according to claim 1, wherein
that said object management means comprises:
take-out means (S92) for taking out a requested object from the objects stored in the object storage means;
determination means (S93) for determining whether the object taken out by the take-out means is to be executed by the object execution means of origin of request; and
means for supplying the taken-out object to the object execution means of the origin of the request when the determination means determines that the taken-out object is to be executed by the object execution means of the origin of the request.

4. The monitor control system according to claim 1, wherein said object management means comprises:
take-out means for taking out the requested object from the objects stored in the object storage means; and
select means for selecting one of the object execution means to be executed the object taken out by the take-out means.

5. The monitor control system according to claim 4, wherein said select means selects the object execution means, which executes the taken-out object in a shortest time period from the beginning to the end of execution.

6. The monitor control system according to claim 1, wherein said object is executed by the object execution means to generate information for monitoring and controlling the to-be-monitored and controlled system on the basis of the information gathered by the information gather means.

7. The monitor control system according to claim 1, wherein said object is executed by the object execution means to generate information indicating the state of the to-be-monitored and controlled system on the basis of the information gathered by the information gather means.

8. The monitor control system according to claim 1, wherein said object storage means stores:
a first object for generating information for monitoring and controlling the to-be-monitored and controlled system on the basis of the information gathered by the information gather means; and
a second object for generating information indicating the state of the to-be-monitored and controlled system on the basis of the information gathered by the information gather means, and
wherein said first object is executed by the object execution means to generate information for monitoring and controlling the to-be-monitored and controlled system on the basis of the information gathered by the information gather means, and
said second object is executed by the object execution means to generate information indicating the state of the to-be-monitored and controlled system on the basis of the information generated by the first object.

9. The monitor control system according to claim 1, further comprising:
control information output means for outputting control information representing a control instruction for the to-be-monitored and controlled system; and
control signal output means for generating a control signal for the to-be-monitored and controlled system on the basis of the control information output from the control information output means, and outputting the generated control signal to the to-be-monitored and controlled system.

10. The monitor control system according to claim 1, wherein said object storage means stores a first object for outputting control information representing a control instruction for the to-be-monitored and controlled system,
said object execution means executes the first object supplied by the object management means, thereby outputting the control information representing the control instruction for the to-be-monitored and controlled system, and
the monitor control system further comprises control signal output means for generating a control signal for the to-be-monitored and controlled system on the basis of the control information, and outputting the generated control signal to the to-be-monitored and controlled system.

11. The monitor control system according to claim 1, wherein:
the third computer includes control information output means for outputting control information representing a control instruction for the to-be-monitored and controlled system,
the object storage means stores a control object for generating a control signal for the to-be-monitored and controlled system, and outputting the generated control signal to the to-be-monitored and controlled system, and
the object execution means executes the second object supplied by the object management means, thereby generating the control signal for the to-be-monitored and controlled system on the basis of the control information output from the control information output means, and outputting the generated control signal to the to-be-monitored and controlled system.

12. The monitor control system according to claim 1, wherein said object storage means stores:
a first object for outputting control information representing a control instruction for the to-be-monitored and controlled system, and
a second object for generating a control signal for the to-be-monitored and controlled system and outputting the generated control signal to the to-be-monitored and controlled system, and
wherein said object execution means executes the first object supplied by the object management means, thereby outputting the control information representing the control instruction for the to-be-monitored and controlled system, and executes the second object supplied by the object management means, thereby generating the control signal for the to-be-monitored and controlled system and outputting the generated control signal to the to-be-monitored and controlled system.

13. The monitor control system according to claim 1, wherein said object storage means stores:
a first object for outputting control information representing a control instruction for the to-be-monitored and controlled system, and generating information for monitoring and controlling the to-be-monitored and controlled system on the basis of the information gathered by the information gather means; and
a second object for generating a control signal for the to-be-monitored and controlled system on the basis of the control information and outputting the generated control signal to the to-be-monitored and controlled system, and
wherein said object execution means executes the first object supplied by the object management means, thereby outputting the control information representing the control instruction for the to-be-monitored and controlled system, and generating the information for monitoring and controlling the to-be-monitored and controlled system on the basis of the information gathered by the information gather means, and
the object execution means executes the second object supplied by the object management means, thereby generating the control signal for the to-be-monitored and controlled system on the basis of the control information and outputting the generated control signal to the to-be-monitored and controlled system.

14. The monitor control system according to claim 1, whereinthe information gather means comprises:
first information gather means for gathering information representing the state of part of the to-be-monitored and controlled system; and
second information gather means for gathering information representing the state of the other part of the to-be-monitored and controlled system.

15. The monitor control system according to claim 1, wherein the object execution means further comprises object hold means for holding the object supplied from the object management means.

## Patentansprüche

1. Überwachungssteuersystem mit:
einem ersten Computer, der mit einem Netzwerk verbunden ist, mit einem Informationssammelmittel (11) zum Sammeln von Information bezüglich des Zustands eines zu überwachenden und zu steuernden Systems;
einem zweiten Computer, der mit dem Netzwerk verbunden ist, mit einem Objektspeichermittel (12) zum Speichern von einem oder mehreren Objekten zum Überwachen und zum Steuern des zu überwachenden und zu steuernden Systems und einem Objektmanagementmittel (14) zum Zuführen eines Objekts, das in dem Objektspeichermittel gespeichert ist; und
einem dritten Computer, der mit dem Netzwerk verbunden ist, mit einem Objektausführmittel (13) zum Ausführen des Objekts, das von dem Objektmanagementmittel über das Netzwerk zugeführt wurde, auf der Basis der Information, die von dem Informationssammelmittel gesammelt und über das Netzwerk empfangen wurde, wobei das Objekt ausgestaltet ist, um eine Rufanfrage nach einem anderen Objekt, das in dem Objektspeichermittel gespeichert ist, zu veranlassen, wobei
das Objektmanagementmittel ausgestaltet ist, um das in dem Objektspeichermittel gespeicherte Objekt zu dem Objektausführmittel über das Netzwerk zuzuführen, wenn das Objekt die Rufanfrage nach dem anderen Objekt in dem Objektspeichermittel veranlasst.

2. Überwachungssteuersystem nach Anspruch 1, bei dem das Objekt zumindest eines von einem Programm und Daten zum Überwachen und Steuern des zu überwachenden und zu steuernden Systems enthält.

3. Überwachungssteuersystem nach Anspruch 1, wobei das Objektmanagementmittel umfasst:
Entnahmemittel (S92) zum Entnehmen des angefragten Objekts von den Objekten, die in dem Objektspeichermittel gespeichert sind;
Bestimmungsmittel (S93) zum Bestimmen, ob das von dem Entnahmeobjekt entnommene Objekt durch das Objektausführmittel des Ursprungs der Anfrage auszuführen ist; und
Mittel zum Zuführen des entnommenen Objekts zu dem Objektausführmittel des Ursprungs der Anfrage, wenn das Bestimmungsmittel bestimmt, dass das entnommene Objekt durch das Objektausführmittel des Ursprungs der Anfrage auszuführen ist.

4. Überwachungssteuersystem nach Anspruch 1, bei dem das Objektmanagementmittel umfasst:
Entnahmemittel zum Entnehmen des angefragten Objekts von den Objekten, die in dem Objektspeichermittel gespeichert sind; und
Auswahlmittel zum Auswählen eines der Objektausführmittel zum Ausführen des Objekts, das von dem Objektentnahmemittel entnommen wurde.

5. Überwachungssteuersystem nach Anspruch 4, bei dem das Auswahlmittel das Objektausführmittel auswählt, das das entnommene Objekt in einer kürzesten Zeitspanne von dem Beginn bis zum Ende der Ausführung ausführt.

6. Überwachungssteuersystem nach Anspruch 1, bei dem das Objekt durch das Objektausführmittel zum Erzeugen von Information zum Überwachen und Steuern des zu überwachenden und zu steuernden Systems auf der Basis der Information, die von dem Informationssammelmittel gesammelt wurde, ausführt.

7. Überwachungssteuersystem nach Anspruch 1, bei dem das Objekt von dem Objektausführmittel zum Erzeugen von Information ausgeführt wird, die den Zustand des im überwachenden und zu steuernden Systems anzeigt, beruhend auf der Information, die von dem Informationssammelmittel gesammelt wurde.

8. Überwachungssteuersystem nach Anspruch 1, bei dem das Objektspeichermittel speichert:
ein erstes Objekt zum Erzeugen von Information zum Überwachen und Steuern des zu überwachenden und zu steuernden Systems auf der Basis der Information, die von dem Informationssammelmittel gesammelt wurde; und
ein zweites Objekt zum Erzeugen von Information, die einen Zustand des zu überwachenden und zu steuernden Systems anzeigt, auf der Basis der Information, die von dem Informationssammelmittel gesammelt wurde; und
wobei das erste Objekt von dem Objektausführmittel ausgeführt wird, um Information zum Überwachen und Steuern des zu überwachenden und zu steuernden Systems auf der Grundlage der Information, die von dem Informationssammelmittel gesammelt wurde, zu erzeugen; und
wobei das zweite Objekt von dem Objektausführmittel ausgeführt wird um Information zu erzeugen, die einen Zustand des zu überwachenden und zu steuernden Systems auf der Basis der Information anzeigt, die von dem Informationssammelmittel gesammelt wurde.

9. Überwachungssteuersystem nach Anspruch 1, des Weiteren mit:
einem Steuerinformationsausgabemittel zum Ausgeben von Steuerinformation, die eine Steueranweisung für das zu überwachende und zu steuernde System darstellt; und
einem Steuersignalausgabemittel zum Erzeugen eines Steuersignals für das zu überwachende und zu steuernde System auf der Basis der Steuerinformation, die von dem Steuerinformationsausgabemittel ausgegeben wurde, und zum Ausgeben des erzeugten Steuersignals an das zu steuernde und zu überwachende System.

10. Überwachungssteuersystem nach Anspruch 1, bei dem das Objektspeichermittel ein erstes Objekt zum Ausgeben von Steuerinformation speichert, die eine Steueranweisung für das zu überwachende und zu steuernde System darstellt;
wobei das Objektausführmittel das erste Objekt ausführt, das von dem Objektmanagementmittel zugeführt wird, wodurch die Steuerinformation ausgegeben wird, die die Steueranweisung für das zu überwachende und zu steuernde System darstellt; und
wobei das Überwachungssteuersystem des Weiteren ein Steuersignalausgabemittel zum Erzeugen eines Steuersignals auf der Basis der Steuerinformation für das zu überwachende und zu steuernde System enthält, und zum Ausgeben des erzeugten Steuersignals an das zu überwachende und zu steuernde System.

11. Überwachungssteuersystem nach Anspruch 1, bei dem:
der dritte Computer Steuerinformationsausgabemittel zum Ausgeben von Steuerinformation enthält, die eine Steueranweisung für das zu überwachende und zu steuernde System darstellt;
wobei das Objektspeichermittel ein Steuerobjekt zum Erzeugen eines Steuersignals für das zu überwachende und zu steuernde System speichert und das erzeugte Steuersignal an das zu überwachende und zu steuernde System ausgibt; und
wobei das Objektausführmittel das zweite Objekt ausführt, das von dem Objektmanagementmittel zugeführt wird, wodurch das Steuersignal für das zu überwachende und zu steuernde System auf der Basis der Steuerinformation erzeugt wird, die von dem Steuerinformationsausgabemittel ausgegeben wird, und das erzeugte Steuersignal an das zu überwachende und zu steuernde System angegeben wird.

12. Überwachungssteuersystem nach Anspruch 1, bei dem das Objektspeichermittel speichert:
ein erstes Objekt zum Ausgeben von Steuerinformation, die eine Steueranweisung für das zu überwachende und zu steuernde System darstellt, und
ein zweites Objekt zum Erzeugen eines Steuersignals für das zu überwachende und zu steuernde System und zum Ausgeben des erzeugten Steuersignals an das zu überwachende und zu steuernde System; und
wobei das Objektausführmittel das erste Objekt ausführt, das von dem Objektmanagementmittel zugeführt wird, wodurch die Steuerinformation ausgegeben wird, die die Steueranweisung für das zu überwachende und zu steuernde System darstellt, und das zweite Objekt ausführt, das von dem Objektmanagementmittel zugeführt wird, wodurch das Steuersignal für das zu überwachende und zu steuernde System erzeugt wird, und das erzeugte Steuersignal an das zu überwachende und zu steuernde System ausgegeben wird.

13. Überwachungssteuersystem nach Anspruch 1, bei dem das Objektspeichermittel speichert:
ein erstes Objekt zum Ausgeben von Steuerinformation, die eine Steueranweisung für das zu überwachende und zu steuernde System darstellt, und zum Erzeugen von Information zum Überwachen und zum Steuern des zu überwachenden und zu steuernden Systems auf der Basis der Information, die von dem Informationssammelmittel gesammelt wurde; und
ein zweites Objekt zum Erzeugen eines Steuersignals für das zu überwachende und zu steuernde System auf der Basis der Steuerinformation und zum Ausgeben des erzeugten Steuersignals an das zu überwachende und zu steuernde System; und
wobei das Objektausführmittel das erste Objekt ausführt, das von dem Objektmanagementmittel zugeführt wird, wodurch die Steuerinformation ausgeben wird, die die Steueranweisung für das zu überwachende und zu steuernde System darstellt, und die Information zum Überwachen und zum Steuern des zu überwachenden und zu steuernden Systems auf der Basis der Information, die von dem Informationssammelmittel gesammelt wurde erzeugt wird; und
wobei das Objektausführmittel das zweite Objekt ausführt, das von dem Objektmanagementmittel zugeführt wird, wodurch das Steuersignal für das zu überwachende und zu steuernde System auf der Grundlage der Steuerinformation erzeugt wird, und das erzeugte Steuersignal an das zu überwachende und zu steuernde System angegeben wird.

14. Überwachungssteuersystem nach Anspruch 1, bei dem das Informationssammelmittel umfasst:
ein erstes Informationssammelmittel zum Sammeln von Information, die den Zustand eines Teils des zu überwachenden und zu steuernden Systems darstellt; und
ein zweites Informationssammelmittel zum Sammeln von Information, die den Zustand des anderen Teils des zu überwachenden und zu steuernden Systems darstellt.

15. Überwachungssteuersystem nach Anspruch 1, bei dem das Objektausführmittel des Weiteren ein Objekthaltemittel zum Halten des Objekts umfasst, das von dem Objektmanagementmittel zugeführt wurde.

## Revendications

1. Système de contrôle et de surveillance qui comprend :
un premier ordinateur, relié à un réseau, qui comprend un moyen de collecte d'informations (11) destiné à collecter des informations sur un état d'un système contrôlé et à surveiller ;
un deuxième ordinateur, relié au réseau, qui comprend un moyen de stockage d'objets (12) destiné à stocker un ou plusieurs objet(s) afin de surveiller et de contrôler le système contrôlé et à surveiller, et un moyen de gestion d'objets (14) destiné à fournir un objet stocké dans le moyen de stockage d'objets ; et
un troisième ordinateur, relié au réseau, qui comprend des moyens d'exécution d'objet (13) destinés à exécuter l'objet fourni par le moyen de gestion d'objets via le réseau, sur la base des informations collectées par le moyen de collecte d'informations et reçues via le réseau, ledit objet étant adapté pour émettre une demande d'appel vers un autre objet stocké dans le moyen de stockage ; dans lequel
le moyen de gestion d'objets est adapté pour fournir l'objet stocké dans le moyen de stockage d'objets au moyen d'exécution d'objet via le réseau, lorsque ledit objet émet ladite demande d'appel vers ledit autre objet dans le moyen de stockage d'objets.

2. Système de contrôle et de surveillance selon la revendication 1, dans lequel ledit objet comprend au moins l'un d'un programme et de données pour surveiller et contrôler ledit système contrôlé et à surveiller.

3. Système de contrôle et de surveillance selon la revendication 1, dans lequel ledit moyen de gestion d'objets comprend :
un moyen de sortie (S92) destiné à sortir un objet demandé des objets stockés dans le moyen de stockage d'objets ;
un moyen de détermination (S93) destiné à déterminer si l'objet sorti par le moyen de sortie doit être exécuté par le moyen d'exécution d'objet à l'origine de la demande ; et
un moyen de fourniture de l'objet sorti au moyen d'exécution d'objet à l'origine de la demande lorsque le moyen de détermination détermine que l'objet sorti doit être exécuté par le moyen d'exécution d'objet à l'origine de la demande.

4. Système de contrôle et de surveillance selon la revendication 1, dans lequel ledit moyen de gestion d'objets comprend :
un moyen de sortie destiné à sortir l'objet demandé des objets stockés dans le moyen de stockage d'objets ; et
un moyen de sélection destiné à sélectionner l'un des moyens d'exécution d'objet qui doit exécuter l'objet sorti par le moyen de sortie.

5. Système de contrôle et de surveillance selon la revendication 4, dans lequel ledit moyen de sélection sélectionne le moyen d'exécution d'objet, qui exécute l'objet sorti le plus rapidement possible entre le début et la fin de l'exécution.

6. Système de contrôle et de surveillance selon la revendication 1, dans lequel ledit objet est exécuté par le moyen d'exécution d'objet afin de générer des informations destinées à surveiller et à contrôler le système contrôlé et à surveiller sur la base des informations collectées par le moyen de collecte d'informations.

7. Système de contrôle et de surveillance selon la revendication 1, dans lequel ledit objet est exécuté par le moyen d'exécution d'objet afin de générer des informations qui indiquent l'état du système contrôlé et à surveiller sur la base des informations collectées par le moyen de collecte d'informations.

8. Système de contrôle et de surveillance selon la revendication 1, dans lequel ledit moyen de stockage d'objets stocke :
un premier objet destiné à générer des informations pour surveiller et contrôler le système contrôlé et à surveiller sur la base des informations collectées par le moyen de collecte d'informations ; et
un second objet destiné à générer des informations qui indiquent le statut du système contrôlé et à surveiller sur la base des informations collectées par le moyen de collecte d'informations, et
dans lequel ledit premier objet est exécuté par le moyen d'exécution d'objet afin de générer des informations pour surveiller et contrôler le système contrôlé et à surveiller sur la base des informations collectées par le moyen de collecte d'informations, et
ledit second objet est exécuté par le moyen d'exécution d'objet afin de générer des informations qui indiquent le statut du système contrôlé et à surveiller sur la base des informations générées par le premier objet.

9. Système de contrôle et de surveillance selon la revendication 1, qui comprend en outre :
un moyen de sortie d'informations de contrôle destiné à fournir des informations de contrôle qui représentent une instruction de contrôle pour le système contrôlé et à surveiller ; et
un moyen de sortie de signal de commande destiné à générer un signal de commande pour le système contrôlé et à surveiller sur la base des informations de contrôle fournies par le moyen de sortie d'informations de contrôle, et à fournir le signal de commande généré au système contrôlé et à surveiller.

10. Système de contrôle et de surveillance selon la revendication 1, dans lequel ledit moyen de stockage d'objets stocke un premier objet destiné à fournir des informations de contrôle qui représentent une instruction de contrôle pour le système contrôlé et à surveiller,
ledit moyen d'exécution d'objet exécute le premier objet fourni par le moyen de gestion d'objets, fournissant ainsi les informations de contrôle qui représentent l'instruction de contrôle destinée au système contrôlé et à surveiller, et
le système de contrôle et de surveillance comprend en outre un moyen de sortie de signal de commande destiné à générer un signal de commande pour le système contrôlé et à surveiller sur la base des informations de contrôle, et à fournir le signal de commande généré au système contrôlé et à surveiller.

11. Système de contrôle et de surveillance selon la revendication 1, dans lequel :
le troisième ordinateur comprend un moyen de sortie d'informations de contrôle destiné à fournir des informations de contrôle qui représentent une instruction de contrôle pour le système contrôlé et à surveiller,
le moyen de stockage d'objets stocke un objet de contrôle, afin de générer un signal de commande pour le système contrôlé et à surveiller, et de fournir le signal de commande généré au système contrôlé et à surveiller, et
le moyen d'exécution d'objet exécute le second objet fourni par le moyen de gestion d'objets, générant ainsi le signal de commande pour le système contrôlé et à surveiller sur la base des informations de contrôle fournies par le moyen de sortie d'informations de contrôle, et fournissant le signal de commande généré au système contrôlé et à surveiller.

12. Système de contrôle et de surveillance selon la revendication 1, dans lequel ledit moyen de stockage d'objets stocke :
un premier objet destiné à fournir des informations de contrôle qui représentent une instruction de contrôle pour le système contrôlé et à surveiller, et
un second objet destiné à générer un signal de commande pour le système contrôlé et à surveiller, et à fournir le signal de commande généré au système contrôlé et à surveiller, et
dans lequel ledit moyen d'exécution d'objet exécute le premier objet fourni par le moyen de gestion d'objets, fournissant ainsi les informations de contrôle qui représentent l'instruction de contrôle pour le système contrôlé et à surveiller, et exécute le second objet fourni par le moyen de gestion d'objets, générant ainsi le signal de commande pour le système contrôlé et à surveiller, et fournissant le signal de commande généré au système contrôlé et à surveiller.

13. Système de contrôle et de surveillance selon la revendication 1, dans lequel ledit moyen de stockage d'objets stocke :
un premier objet destiné à fournir des informations de contrôle qui représentent une instruction de contrôle pour le système contrôlé et à surveiller, et à générer des informations pour surveiller et contrôler le système contrôlé et à surveiller sur la base des informations collectées par le moyen de collecte d'informations ; et
un second objet destiné à générer un signal de commande pour le système contrôlé et à surveiller sur la base des informations de contrôle, et à fournir le signal de commande généré au système contrôlé et à surveiller, et
dans lequel ledit moyen d'exécution d'objet exécute le premier objet fourni par le moyen de gestion d'objets, fournissant ainsi les informations de contrôle qui représentent l'instruction de contrôle pour le système contrôlé et à surveiller, et générant les informations pour surveiller et contrôler le système contrôlé et à surveiller sur la base des informations collectées par le moyen de collecte d'informations, et
le moyen d'exécution d'objet exécute le second objet fourni par le moyen de gestion d'objets, générant ainsi le signal de commande destiné au système contrôlé et à surveiller sur la base des informations de contrôle, et fournissant le signal de commande généré au système contrôlé et à surveiller.

14. Système de contrôle et de surveillance selon la revendication 1, dans lequel le moyen de collecte d'informations comprend :
un premier moyen de collecte d'informations destiné à collecter des informations qui représentent le statut d'une partie du système contrôlé et à surveiller ; et
un second moyen de collecte d'informations destiné à collecter des informations qui représentent le statut de l'autre partie du système contrôlé et à surveiller.

15. Système de contrôle et de surveillance selon la revendication 1, dans lequel le moyen d'exécution d'objet comprend en outre un moyen de conservation d'objet destiné à conserver l'objet fourni par le moyen de gestion d'objets.
